# EUROPEAN PATENT APPLICATION

(11) **EP 1 408 693 A1**
(43) Date of publication of application: **14.04.2004**
(21) Application number: 03029341.9
(22) Date of filing: 07.04.1999
(51) Int. Cl.: H04N 7/18, B60R 1/00, H04N 7/62

(54) **On-vehicle image display apparatus, image transmission system, image transmission apparatus, and image capture apparatus**

(30) Priority: 07.04.1998 JP 9430898; 26.06.1998 JP 18085698
(62) Divisional of application: 99106860.2
(71) Applicant: MATSUSHITA ELECTRIC INDUSTRIAL CO., LTD., Kadoma-shi, Osaka 571-8501 (JP)
(72) Inventor: Katta, Noboru, Itami-shi Kasugaoka, 664-0893 (JP); Kurosaki, Toshihiko, Nadaku Takahatyou 1-3-3, 657-0023 (JP); Ibaraki, Susumu, Sakai-shi Osaka 590-0026 (JP)
(74) Representative: Eisenführ, Speiser & Partner

(57) **Abstract**

An on-vehicle image display apparatus comprises: plural cameras; display image creating means for compositing and cutting out a group of images taken by the respective cameras; and image display means; wherein the display image creating means cuts out images which compensate for blind spots of the respective cameras in imaging positions one another, from the plural images of the plural cameras, and composite the cut-out images.

## Description

### FIELD OF THE INVENTION:

The present invention relates to an on-vehicle image display apparatus (an image display apparatus mounted on a car) in which plural cameras for supporting driver's vision are provided on a car and images of the cameras are displayed for the driver, thereby providing the driver with necessary information about areas around the car when he/she is driving the car.

The present invention also relates to an image transmission system in which images taken by plural cameras are composited and displayed, an image transmission apparatus, and an image capture apparatus in the system.

### BACKGROUND OF THE INVENTION:

As a conventional on-vehicle image display apparatus (an image display apparatus mounted on a car), there is a display apparatus in which plural cameras are mounted on the car, switching is performed among the images taken by them, and the selected image is displayed. The cameras are placed so that areas which are relatively blind to the driver are taken by them, and the driver can perform image switching and see the displayed camera image, in order to check whether there is some danger in the blind spots (areas).

In a more advanced system, when detecting "where the driver's eyes are turned", decision on which image the driver will demand is automatically made according to a detection result and image switching is automatically performed, thereby lessening image switching operation by the driver.

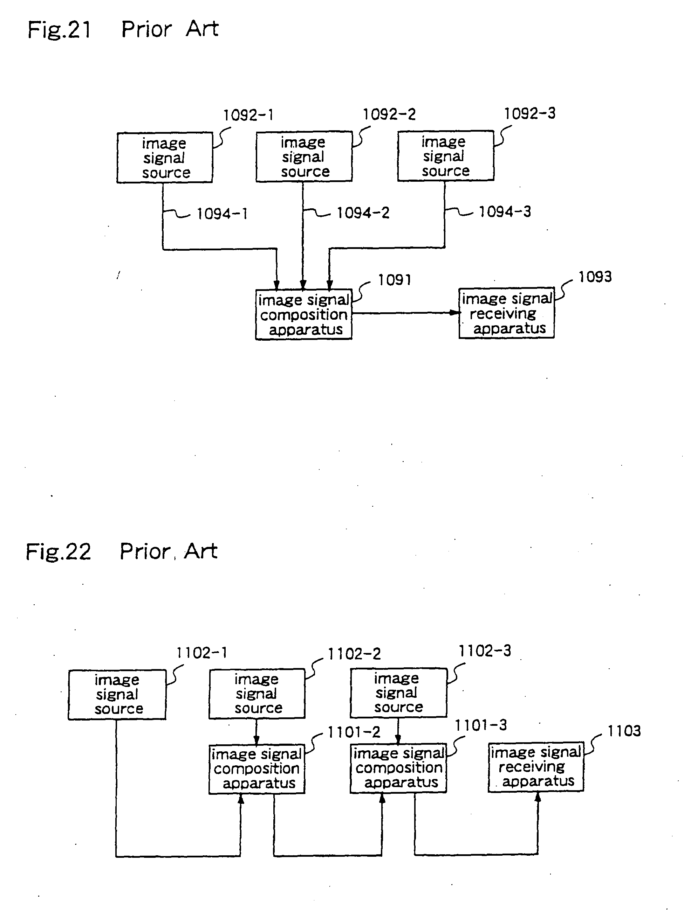

Figure 21 is a diagram showing an example of a conventional image transmission system in which images taken by plural cameras are composited and displayed.

In figure 21, reference numeral 1091 designates an image signal composition apparatus, 1092-1, 1092-2, and 1092-3 designate image signal sources such as TV cameras, 1093 designates an image signal receiving apparatus, and 1094-1, 1094-2, and 1094-3 designate transmission lines for connecting image signals (outputs) of the image signal sources 1092-1, 1092-2, and 1092-3 to first, second, and third input terminals of the image signal composition apparatus 1091. In the conventional image transmission system, the image signals of the image signal sources 1092-1, 1092-2, and 1092-3 are sent to the first, second, and third input terminals of the image signal composition apparatus 1091, through the transmission lines 1094-1, 1092-2, and 1092-3, respectively, and are composited by the image signal composition apparatus 1091 and sent to the image signal receiving apparatus 1093. The image signal receiving apparatus 1093 receives the composite image signal and displays the same on display means (not shown). In the conventional image transmission system, since plural transmission lines are required according to the number of the image signal sources, and it is necessary that the image signal composition apparatus composite the image signals from the plural signal sources into the composite image displayed on the same screen at a time, memories of large capacities needs to be provided, and it takes time to perform image composition. Besides, it is required that the number of the image signal sources be equal to or smaller than that of the input terminals of the image signal composition apparatus.

Figure 22 is a diagram showing another example of a conventional image transmission system disclosed in Japanese Published Patent Application No. Hei 8-32873.

In figure 22, reference numerals 1101-2 and 1101-3 designate image signal composition apparatuses, 1102-1, 1102-2, and 1102-3 designate image signal sources, and 1103 designates an image signal receiving apparatus.

Operation of the image transmission system shown in figure 22 will be described.

The image signal sources 1102-1, 1102-2, and 1102-3 output image signals and the image signal composition apparatuses 1101-2 and 1101-3 each composites two image signals to generate an image signal. To be specific, the image signal output from the image signal source 1102-1 and the image signal output from the image signal 1102-2 are composited by the image signal composition apparatus 1101-2, and the image signal output from the image signal composition apparatus 1101-2 and the image signal output from the image signal source 1102-3 are composited by the image signal composition apparatus 1101-3. In this manner, the connected image signal sources and image signal composition apparatuses sequentially composite images. A final image signal in which image signals from all the image signal sources are composited, is received and displayed by the image receiving apparatus 1103.

The image transmission system in which images captured by plural image signal sources are composited and displayed, is constructed as described above.

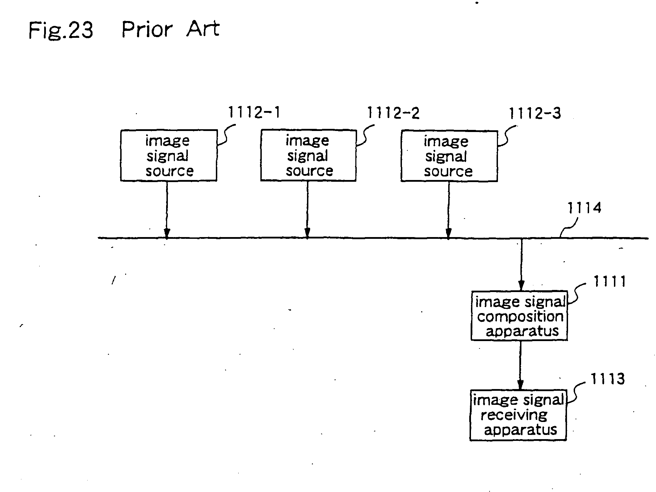

Figure 23 is a diagram showing another example of an image transmission system in which the images taken by plural cameras are composited and displayed.

In figure 23, reference numeral 1111 designates an image signal composition apparatus, 1112-1, 1112-2, and 1112-3 designate image signal sources such as TV cameras, 1113 designates an image signal receiving apparatus, 1114 designates a common transmission line to which the image signal sources 1112-1, 1112-2, 1112-3, and the image signal composition apparatus 1111 are connected. In this conventional image transmission system, the image signal sources 1112-1, 1112-2, and 1112-3 send image signals to the common transmission line 1114 and the image signal composition apparatus 1111 obtains the image signals sent from the respective image signal sources, composites these image signals, and outputs a composite image signal to the image signal receiving apparatus 1113. Receiving the composite image signal, the image signal receiving apparatus 1113 displays the same on display means (not shown). In this conventional image transmission system, one transmission line is provided irrespective of the number of the image signal sources, but a required transmission bandwidth increases with an increase in the number of the image signal sources. In addition, like the conventional example shown in figure 21, since it is necessary that the image signal composition apparatus composite the image signals from the plural image signal sources into the composite image displayed on the same screen at a time, memories of large capacities needs to be provided, and it takes time to perform image composition. In order to reduce the required transmission bandwidth, for instance, as disclosed in Japanese Published Patent Application No. Hei 8-256315, respective image signal sources reduce image signals to data with a resolution required for a composite image and then outputs the resulting image signals toward a transmission line. However, also in this case, in the image signal composition apparatus, since the image signals after data reduction from the respective image signal sources are temporarily stored in a memory, and the stored image signals are relocated according to a predetermined layout to form a composite image, the image signal composition apparatus still requires the memory.

In the above-described on-vehicle display apparatus, since the image of one camera is always displayed on the screen, it is difficult to see all information about areas around the car simultaneously. One solution to this is to make view angles of respective cameras wide. However, because blind spots (areas) blocked by a car body are present, the respective cameras cannot recognize some danger in the blind spots, even though it looks like that they can see the whole areas. By way of example, a backward imaging camera can see the whole area behind the car body in wide angle, but cannot see its side areas (blind spots). Side area backward imaging cameras cannot see an area just behind the car body, i.e., an area hidden by the car body.

As described above, in the conventional image transmission system shown in figure 22, since the image signals output from the plural image signal sources are sequentially composited by the image signal composition apparatuses 1101, delay increases with an increase in the number of the image signal sources. In addition, the image signal composition apparatuses 1101 require memories for image composition, which results in a large-scale circuit. Besides, the image composition method, for instance, placement of the images from the respective image signal sources on the composite image is predetermined, and cannot be changed with ease.

In the conventional image transmission system shown in figure 23, when the number of the image signal sources increases, the required transmission bandwidth on the transmission line correspondingly increases. Also, in the system in which the respective signal sources reduce the image signals to data with a resolution necessary for the composite image in order to reduce the required transmission bandwidth, since the image signals after data reduction from the respective image signal sources are temporarily stored in the memory, and the stored image signals are relocated according to the predetermined layout to form the composite image, the image signal composition apparatus still requires the memory, and thereby a circuit scale is increased.

### SUMMARY OF THE INVENTION:

It is an object of the present invention to provide an on-vehicle image display apparatus which is capable of seeing the whole area around a car body without blind spots and efficiently performing switching to a detailed image in a displayed image.

It is another object of the present invention to provide an image transmission system which is capable of increasing image signal sources without increasing a circuit scale and easily changing an image composition method, and an image transmission apparatus for use in the image transmission system.

Other objects and advantages of the invention will become apparent from the detailed description that follows. The detailed description and specific embodiments described are provided only for illustration since various additions and modification within the spirit and scope of the invention will be apparent to those skill in the art from the detailed description.

According to a first aspect of the present invention, an on-vehicle image display apparatus comprises: plural cameras; display image creating means for compositing and cutting out a group of images taken by the respective cameras; and image display means, wherein the display image creating means cuts out images which compensate for blind spots of the respective cameras in imaging positions one another, from the plural images of the plural cameras, and composite the cut-out images. Therefore, it is possible to generate and display the composite image in such a way that the blind spots in the plural images can be compensated for, and thereby to realize the on-vehicle image display apparatus with which the driver can see the whole area around the car without the blind spots.

According to a second aspect of the present invention, in the on-vehicle display apparatus of the first aspect, the plural cameras include a left-side area backward imaging camera for taking an image of an area in a backward direction from a left-side area of a car body, a right-side area backward imaging camera for taking an image of an area in a backward direction from a right-side area of the car body, and a backward imaging camera for taking an image of an area in a backward direction from a rear portion of the car body, and the display image creating means composites the images of the left-side area backward imaging camera, the right-side area backward imaging camera, and the backward imaging camera. Therefore, it is possible to generate and display the composite image in such a way that the blind spots in the plural images can be compensated for, and thereby to realize the on-vehicle image display apparatus with which the driver can see the whole area around the car without the blind spots.

According to a third aspect of the present invention, in the on-vehicle image display apparatus of the second aspect, the display image creating means cuts out an image which compensates for the blind spots of the car body for the left-side area backward imaging camera and the right-side area backward imaging camera, from the image taken by the backward imaging camera, cuts out images which compensate for blind spots outside the view angle of the backward imaging camera, from the images taken by the left-side area backward imaging camera and the right-side area backward imaging camera, and composites the cut-out images. Therefore, it is possible to generate and display the composite image in such a way that the blind spots in the plural images can be compensated for, and thereby to realize the on-vehicle image display apparatus with which the driver can see the whole area around the car without the blind spots.

According to a fourth aspect of the present invention, in the on-vehicle image display apparatus of the first aspect further comprises: touch detecting means provided on an image display screen of the image display means; and image display control means for performing switching of a displayed image according to a detection result of the touch detecting means, wherein the touch detecting means detects a position of an image on the image display screen which is touched by a user, and the image display control means displays an original image of the image displayed in the position in a composite image which has been detected by the touch detecting means, on the display screen. Therefore, the composite image is directly touched by the user to perform switching to a detailed camera image, and thereby the on-vehicle image display apparatus which provides the image required for the driver can be realized.

According to a fifth aspect of the present invention, in the on-vehicle image display apparatus of the second aspect, the side-area backward imaging camera, the right-side area backward imaging camera, and the backward imaging camera have the same view angles, and the backward imaging camera is placed at a point where a view border of the left-side area backward imaging camera on the car body side and a view border of the right-side area backward imaging camera on the car body side are intersected, and the display image creating means performs composition in such a way that car body portions in the images of the right-side area backward imaging camera and the left-side area backward imaging camera are overlapped and connected and an image area in the image of the backward imaging camera is fitted into an image area corresponding to a car body portion in a central portion of the connected images. Therefore, it is possible to generate the composite image of the side area backward imaging cameras and the backward imaging camera in such a way that it looks like the images which are taken by the side area backward imaging cameras when there is no car body.

According to a sixth aspect of the present invention, in the on-vehicle image display apparatus of the fourth aspect, the respective cameras include image compressive coding means for compressively coding an image signal, the images of the respective cameras are transmitted to the display image creating means through common transmission means on which image signals are transmitted, and the image display control means, when the composite image is displayed, controls compression ratios of the image compressive coding units included in the respective camera units so that a transmission band of the transmission means is shared for image transmission of the respective camera units in order to make image qualities of the images of the respective cameras uniform, and when a specified camera image is selected, it performs control so that an image quality of the selected image is made higher. Therefore, when the image signals of the respective cameras are transmitted by the use of a common transmission line such as LAN (local area network) or a bus which limits a transmission bandwidth for the respective images, required image qualities can be obtained as necessary, and display effects are provided as in the case where the plural cameras are connected to the display means through separate transmission lines or a common transmission line which has a transmission bandwidth sufficient to transmit all the images. With the above-described construction, the on-vehicle image display apparatus which achieves these effects can be realized.

According to a seventh aspect of the present invention, in the on-vehicle image display apparatus of the first aspect, the display image creating means changes the area of the image to be cut out in the composite image according to a speed at which a car is running. Therefore, the on-vehicle image display apparatus which is capable of providing appropriate view for the driver according to a running speed.

According to an eighth aspect of the present invention, in an image transmission system comprising a transmission line, at least one image capture apparatus and at least one image receiving apparatus connected to the transmission line, the image transmission apparatus receives an image signal and layout information including original image information for specifying a cut-out position of an image signal to be cut out from the received image signal as inputs and outputs the image signal in the cut-out position toward the transmission line, and the image receiving apparatus includes image generation means for generating an image from the image signals through the transmission line. Therefore, when the image is transmitted by the use of the transmission line, the bandwidth of the transmission line to be used can be reduced, thereby realizing effective use of the bandwidth of the transmission line.

According to a ninth aspect of the present invention, in an image transmission system comprising a transmission line and at least two image transmission apparatuses connected thereto, the transmission line is time-shared into plural access units and the apparatus connected to the transmission line uses the access unit to transmit a packet, and the image transmission apparatuses each receives an image signal and layout information including a display position indicating a position of the image signal in a composite image, converts the image signal into an image signal of the size according to the display position, counts the number of the access units, and outputs the converted image signal at timing according to the display position. Therefore, it is possible to realize the image transmission system in which the image signals captured by the use of plural image capture means connected to the transmission line can be composited without providing storage means for storing the image signal at a receiving end, and the bandwidth of the transmission line or delay due to processing does not depend upon the number of the connected image capture means.

According to a tenth aspect of the present invention, in the image transmission system of the ninth aspect, the system includes a layout information generation unit which outputs layout information including display positions of the images of plural transmission apparatuses. Therefore, it is possible to realize the image transmission system which is capable of dynamically changing the composition method with ease.

According to an eleventh aspect of the present invention, in the image transmission system of the tenth aspect, the layout information generation unit outputs layout information once per frame. Therefore, frame synchronization between the image capture means and the image display means is established with ease.

According to a twelfth aspect of the present invention, in the image transmission system of the ninth aspect, the transmission line is a ring type network. Therefore, using the image transmission system which constructs the ring type network, it is possible to realize the image transmission system in which the image signals captured by the use of the plural image capture means connected to the transmission line can be composited without providing storage means for storing the image signals at a receiving end, and the bandwidth of the transmission line or delay due to processing does not depend upon the number of the connected image capture means.

According to a thirteenth aspect of the present invention, in the image transmission system of the ninth aspect, the image transmission apparatus includes image conversion means which converts a size of an image according to the layout information, and delay means which counts the number of usable access units and outputs the converted image when the number of the usable access units is in a range corresponding to the display position. Therefore, it is possible to realize the image transmission system in which the image signals captured by the use of the plural image capture means connected to the transmission line can be composited without providing storage means for storing the image signals at a receiving end, and the bandwidth of the transmission line or delay due to processing does not depend upon the number of the connected image capture means

According to a fourteenth aspect of the present invention, in the image transmission system of the ninth aspect, the layout information includes original image positions for specifying cut-out positions of images to be cut out from image signals, and the image transmission apparatus cuts out the image signal in the position specified by the original image position and converts the cut-out image into the image of the display size. Therefore, it is possible to realize the image transmission system in which the image signals captured by the use of the plural image capture means connected to the transmission line can be composited without providing storage means for storing the image signals at a receiving end, and the bandwidth of the transmission line or delay due to processing does not depend upon the number of the connected image capture means.

According to a fifteenth aspect of the present invention, in an image transmission system comprising a transmission line on which packets are transmitted, at least one frame synchronization signal receiving apparatus, and a frame synchronization signal transmission apparatus, the frame synchronization signal transmission apparatus outputs a value indicating temporal difference with respect to the frame synchronization signal toward the transmission line as a frame synchronization packet, and the frame synchronization signal receiving apparatus, when it receives the frame synchronization packet, adjusts a phase of the frame synchronization signal based on the value. Therefore, it is possible to obtain the frame synchronization signals of the same phase in plural nodes connected to the transmission line for packet transmission.

According to a sixteenth aspect of the present invention, in the image transmission system of the fifteenth aspect, the frame synchronization signal transmission apparatus includes a first counter for counting the number of clocks, and a first comparison unit which compares a value of the first counter to a predetermined fixed value and outputs the frame synchronization signal when there is match between the value of the first counter and the predetermined fixed value, and outputs the value of the first counter toward the transmission line as the frame synchronization packet, and the frame synchronization signal receiving apparatus includes a second counter for counting the number of clocks, and a second comparison unit which compares a value of the second counter to a predetermined fixed value and outputs the frame synchronization signal when there is match between the value of the second counter and the predetermined fixed value, and when it receives the frame synchronization packet, the receiving apparatus presets its value in the second counter. Therefore, it is possible to obtain the frame synchronization signals of the same phase in plural nodes connected to the transmission line for packet transmission.

According to a seventeenth aspect of the present invention, in an image transmission apparatus connected to a transmission line which is time-shared into plural access units and an apparatus connected thereto uses the access unit to transmit a packet, the apparatus receives an image signal and layout information including a display position indicating a position of the image signal in a composite image as inputs, converts the image signal into an image signal of the size according to the display position, counts the number of access units, and outputs the converted image signal at timing according to the display position. Therefore, it is possible to realize the image transmission apparatus included in the image transmission system in which the image signals captured by the use of the plural image capture means connected to the transmission line can be composited without providing storage means for storing the image signals at a receiving end, and the bandwidth of the transmission line or delay due to processing does not depend upon the number of the connected image capture means.

According to an eighteenth aspect of the present invention, in the image transmission apparatus of seventeenth aspect, the apparatus includes image conversion means which converts a size of the image according to the layout information, and delay means which counts the number of usable access units and outputs the converted image when the number of the usable access units is in a range corresponding to the display position. Therefore, it is possible to realize the image transmission apparatus included in the image transmission system in which the image signals captured by the use of the plural image capture means connected to the transmission line can be composited without providing storage means for storing the image signals at a receiving end, and the bandwidth of the transmission line or delay due to processing does not depend upon the number of the connected image capture means.

According to a nineteenth aspect of the present invention, in the image transmission apparatus of the seventeenth aspect, the apparatus receives layout information including an original image position for specifying a cut-out position of an image signal to be cut out from the image signal, cuts out the image signal in the position specified by the original image position, and then converts the cut-out image signal into the image signal of the size according to the display position. Therefore, it is possible to realize the image transmission apparatus included in the image transmission system in which the image signals captured by the use of the plural image capture means connected to the transmission line can be composited without providing storage means for storing the image signals at a receiving end, and the bandwidth of the transmission line or delay due to processing does not depend upon the number of the connected image capture means.

According to a twentieth aspect of the present invention, there is provided an image transmission apparatus which receives an image signal and layout information including original image information for specifying a cut-out position of an image signal to be cut out from the received image signal as inputs and outputs the image signal in the cut-out position. Therefore, when the image is transmitted by the use of the transmission line, the bandwidth of the transmission line to be used can be reduced, thereby realizing effective use of the bandwidth of the transmission line.

According to a twenty-first aspect of the present invention, there is provided an image capture apparatus which captures an image signal of a real image and receives layout information including original image information for specifying a cut-out position of an image signal to be cut out from the captured image signal as an input and outputs the image signal in the cut-out position. Therefore, it is possible to realize the image capture apparatus which is individually connected to the transmission line and reduce the bandwidth of the transmission line used for image transmission, thereby realizing effective use of the bandwidth of the transmission line.

### BRIEF DESCRIPTION OF THE DRAWINGS:

Figure 1 is a diagram showing an on-vehicle image display apparatus according to a first embodiment of the present invention.
Figure 2 is a diagram showing a camera node included in the on-vehicle image display apparatus of the first embodiment.
Figure 3 is a diagram showing a video display node included in the on-vehicle image display apparatus of the first embodiment.
Figure 4 is a diagram showing a composite image generated by an image composition unit included in the on-vehicle image display apparatus of the first embodiment.
Figures 5(a) and 5(b) are diagrams showing positional relationship of backward imaging cameras included in the on-vehicle image display apparatus of the first embodiment.
Figure 6 is a diagram for explaining an image composition method performed by the image composition unit included in the on-vehicle image display apparatus of the first embodiment.
Figure 7 is a diagram for explaining which area in an image of a backward imaging camera corresponds to blind spots in images of side area backward imaging cameras included in the on-vehicle image display apparatus of the first embodiment.
Figure 8 is a diagram for explaining trimming performed by the image composition unit included in the on-vehicle image display apparatus of the first embodiment.
Figure 9 is a diagram showing the composition unit included in the on-vehicle image display apparatus of the first embodiment.
Figure 10 is a diagram showing processing performed by a control unit included in the on-vehicle image display apparatus of the first embodiment.
Figure 11 is a flowchart for explaining flow of composition pattern direction process performed by the control unit included in the on-vehicle image display apparatus of the first embodiment.
Figure 12 is a flowchart for explaining flow of band control process performed by the control unit included in the on-vehicle image display apparatus of the first embodiment.
Figure 13 is a diagram showing an image transmission system according to a second embodiment of the present invention.
Figure 14 is a diagram showing an image signal handled in the image transmission system of the second embodiment.
Figures 15(a)-15(d)are diagrams for explaining image composition in the image transmission system of the second embodiment.
Figure 16 is a diagram showing layout information used in the image transmission system of the second embodiment.
Figure 17 is a diagram for explaining image information transmission in the image transmission system of the second embodiment.
Figure 18 is a diagram for explaining another image composition in the image transmission system of the second embodiment.
Figures 19(a)-19(d) are diagrams for explaining another image composition in the image transmission system of the second embodiment.
Figure 20 is a diagram showing a transmission line in the image transmission system of the second embodiment.
Figure 21 is a diagram showing a prior art image transmission system.
Figure 22 is a diagram showing another prior art image transmission system.
Figure 23 is a diagram showing still another prior art image transmission system.
Figure 24 is a diagram showing another construction of the image transmission system of the second embodiment.
Figure 25 is a diagram showing an example of image composition in the another construction of the image transmission system of the second embodiment.
Figure 26 is a diagram showing an image capture apparatus used in the image transmission system of the second embodiment.
Figure 27 is a diagram showing an example of a method for establishing frame synchronization between a transmission apparatus and a receiving apparatus in the image transmission system of the second embodiment.

### DETAILED DESCRIPTION OF THE PREFERRED EMBODIMENTS:

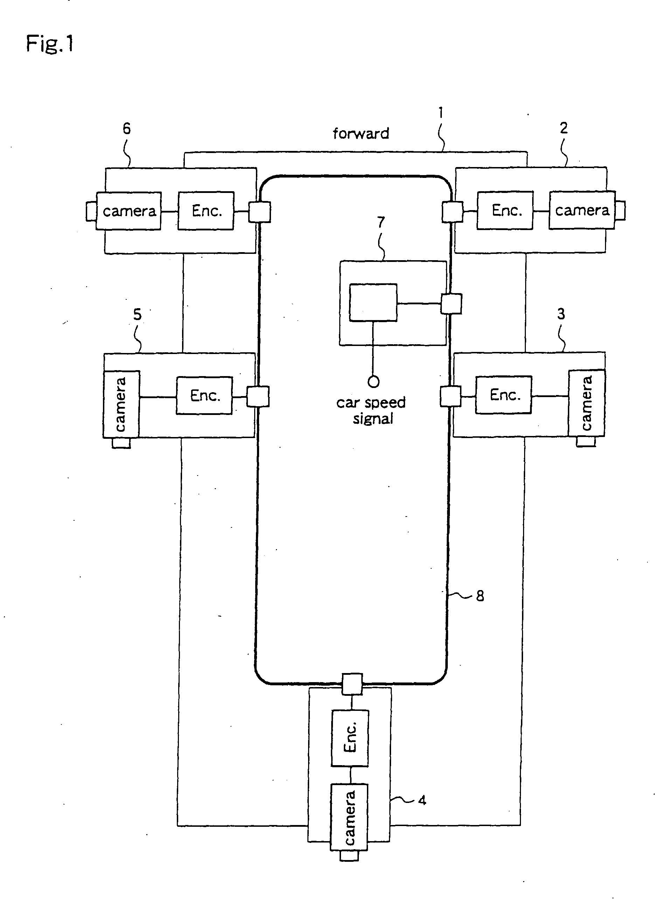

Now, a description will be given of the first embodiment with reference to figures 1 through 12.

Figure 1 is a diagram showing a structure of an on-vehicle image display apparatus (display apparatus mounted on a car) according to a first embodiment of the present invention. In figure 1, reference numeral 1 designates a car body, and numerals 2, 3, 4, 5, and 6 designate camera nodes each comprising a connection node to a bus for video transmission, a camera, and an image compression unit. Hereinafter, the camera nodes 2, 3, 4, 5 and 6 are referred to as a forward right-side area imaging camera node, a right-side area backward imaging camera node, a backward imaging camera node, a left-side area backward imaging camera node, and a forward left-side area imaging camera node, respectively. Reference numeral 7 designates a video display node including a connection node to a bus 8 for video transmission, which composites transmitted images and display a composite image.

Subsequently, operation of so constructed display apparatus will be described.

Each camera in each camera node takes an image in a position and a direction which are preset. To be specific, in the forward right-side area imaging camera node 2, taken is an image of an area in a right lateral direction from a front right-end portion of the car body. In the right-side area backward imaging camera node 3, taken is an image of an area in a backward direction from a right-side area of the car body. In the backward imaging camera node 4, taken is an image of an area in a backward direction from a rear portion of the car body. In the left-side area backward imaging camera node 5, taken is an image of an area in a backward direction from a left-side area of the car body. In the forward left-side area imaging camera node 6, taken is an image of an area in a left lateral direction from a front left-end portion of the car body.

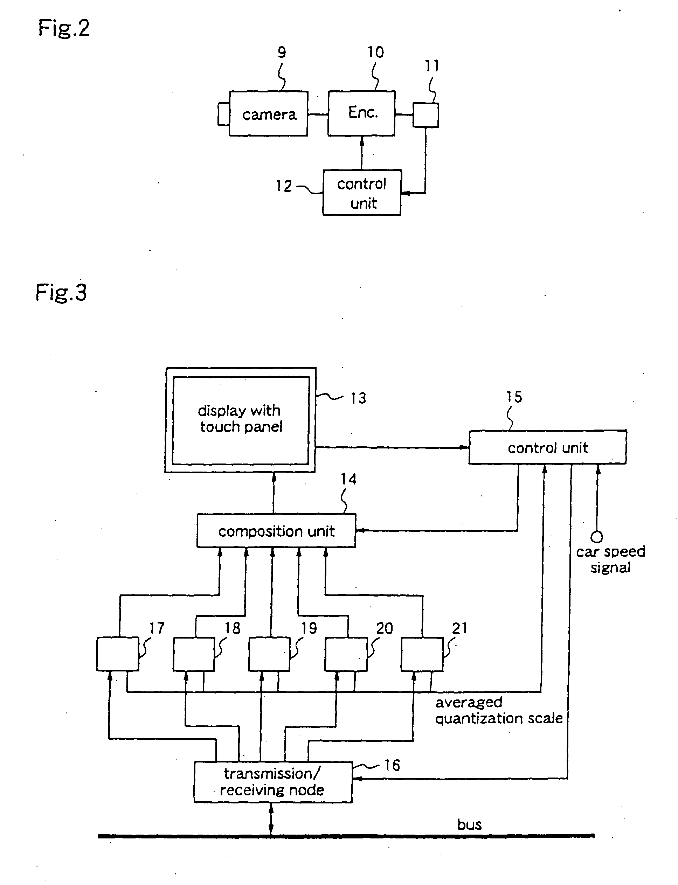

Figure 2 shows a structure of each camera node. In figure 2, reference numerals 9, 10, 11, and 12 designate a camera, an image compressive coding unit, a bus control node (transmission/receiving node), and a control unit, respectively. An image taken by the camera 9 is compressively coded by the image compressive coding unit 10. In this case, a parameter which determines a compression ratio is given by the control unit 12. Compressed image data is sent through the bus control node 11 to the bus and then to the video display node 7. The control unit 12 sends a compression ratio control signal to the image compressive coding unit 10 according to band management information sent from the video display node through the bus control node 11. Image data from each camera node is sent to the video display node 7.

Figure 3 is a diagram showing a structure of the video display node 7. In figure 3, reference numerals 13, 14, and 15, designate a display with a touch panel (touch panel display), an image composition unit, a control unit for controlling display of images or image qualities of respective images. Reference numeral 16 designates the bus control node (transmission/receiving node) which receives data sent from respective camera nodes to the bus and sends the control signal from the control unit 15 to the camera nodes on the bus. Reference numerals 17, 18, 19, 20 and 21 designate image reproducing units. The image data sent from the respective camera nodes is sorted out into respective image data through the transmitting/receiving node 16, and sent to the image reproducing units 17-21, respectively, where they are reproduced and then are sent to the image composition unit 14. The image composition unit 14 generates six image patterns according to a signal from the control unit 15. These six pattern images are 5 camera images, namely, the image taken by the forward right-side area imaging camera, the image taken by the right-side area backward imaging camera, the image taken by the backward imaging camera, the image taken by the left-side area backward imaging camera, the image taken by the forward left-side area imaging camera, and a composite image composed of the image taken by the forward right-side area imaging camera and the image taken by the forward left-side area imaging camera which have been reduced and displayed in the upper portion, and the image taken by the right-side area backward imaging camera, the image taken by the backward imaging camera, and the image taken by the left-side area backward imaging camera which have been reduced and displayed in the lower portion. Five out of the six pattern images can be displayed only by input switching.

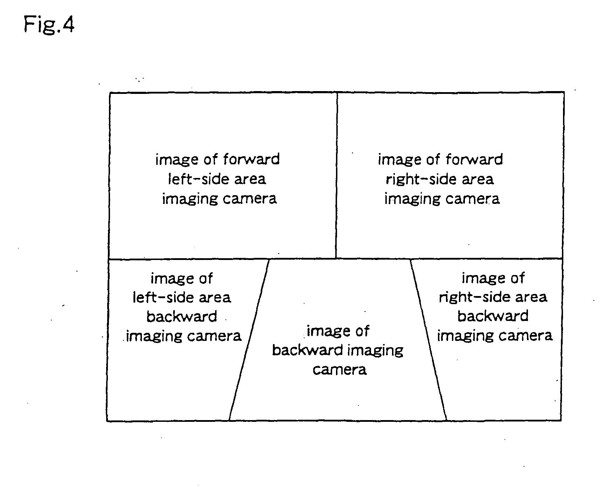

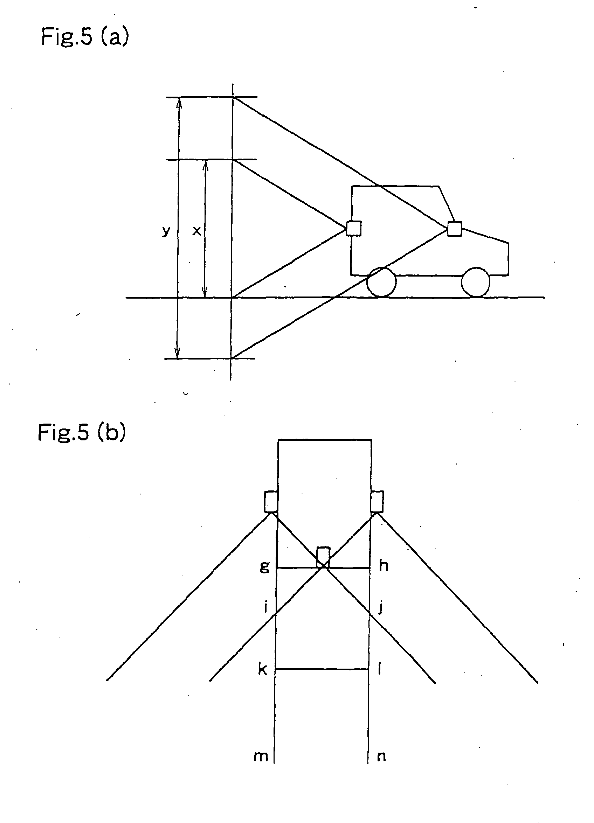

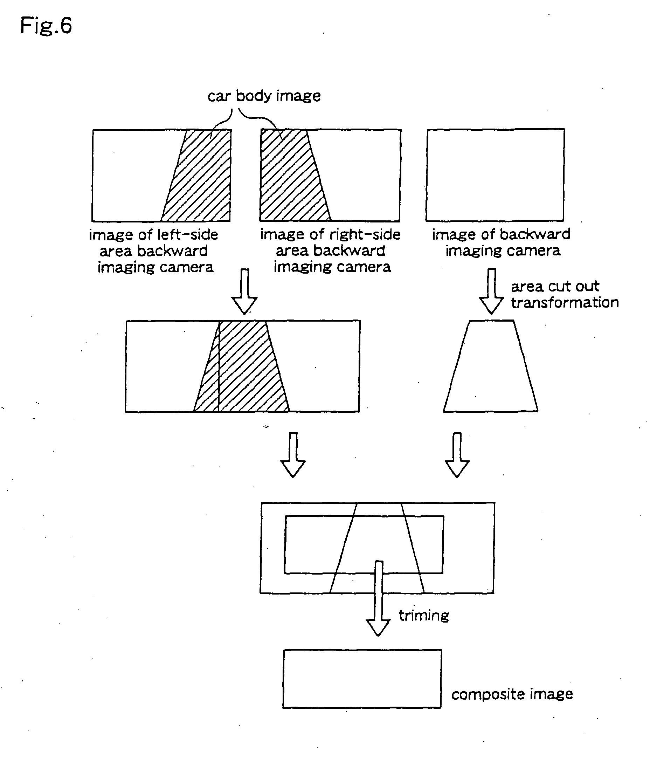

A composition method of the pattern shown in figure 4 will be described. In the image shown in figure 4, the images placed in the upper portion are only reduced and connected, which will not be discussed. Hence, a description will be given of the composition method of the images placed in the lower potion. Figure 5 shows the positional relationship among the three backward imaging cameras. As shown in figure 5(a), the optical axes of the cameras are disposed in parallel. Also, as shown in figure 5(b), the backward camera is disposed on the point at which view boundaries of the right and left cameras are intersected. Thereby, the image taken by the backward imaging camera 4 compensates for the view area blocked by the car body for the respective right and left side-area backward imaging cameras. Figure 6 is a diagram for explaining the composition method of the images in the lower portion. First, portions corresponding to car body images (portions expressed as oblique lines) in the images taken by the right and left side-area backward imaging cameras are overlapped. Next, an image which replaces the overlapped image is selected (cut out) from the image taken by the backward imaging camera and transformed. This cut-out image and the overlapped image are composited, and then is subjected to trimming and enlarged or reduced, to form a composite image.

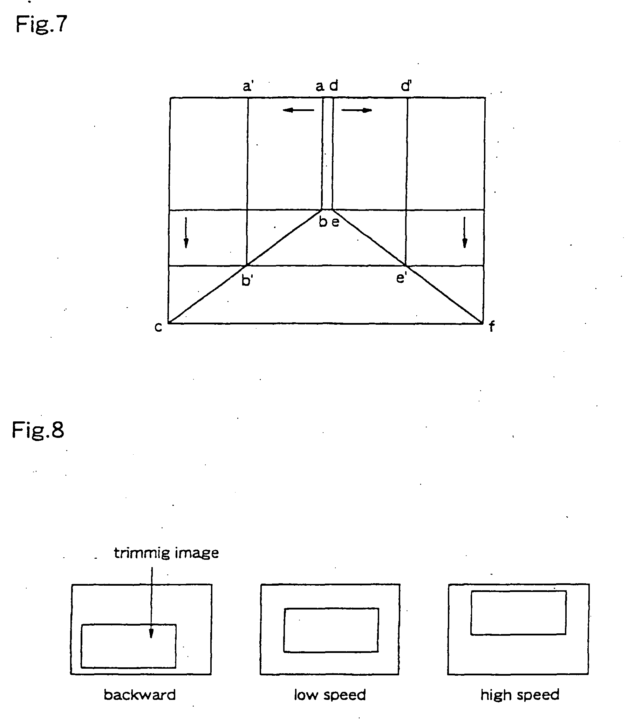

A description will be given of the image cut out from the image taken by the backward imaging camera. As is apparent from figure 5(b), a blind area of the right and left side-area backward imaging cameras is the area just behind the car body between straight lines gm and hn. Figure 7 is a diagram showing which area in the image taken by the backward imaging camera the above-described blind area corresponds to. When there is nothing but ground just behind the car body, assuming that the line "im" shown in figure 5(b) is "cb" and the line "jn" shown in figure 5 (b) is "fe", the behind area corresponds to an area represented by lines "abcfed". Hence, if an area other than this area is cut out and added to the image, this overlaps the image taken by the side-area backward cameras, and the resulting composite image looks like an image including two objects. When there is a big object on a line "kl" shown in figure 5(b), assuming that k and 1 are b' and e' shown in figure 7, the blind area corresponds to an image represented by a'b'cfe'd'. That is, the blind area varies depending upon distance between the object and the car body. Meanwhile, information provided for a driver with priority is the closest following car. Considering that the closest following car is more important than the other backward following cars, the area a'b'cfe'd' is cut out using some appropriate distance between cars as an assumed distance, and an object present farther permits its image to be taken as including two objects to some extent, whereas an object present closer permits its image to be taken as protruding from the displayed image to some extent. The assumed distance varies depending upon speeds in such a way that it increases with an increasing speed. For example, the distance is about 5m when the car is running at a low speed and it is 10m when at a high speed. The cut-out area a'b'cfe'd' is transformed into a trapezoid-shaped area. As is apparent from figure 5(a), the view areas in the longitudinal direction are also different, according to the ratio of one view area to the other view area in the assumed distance, i.e., x:y, the area a'b'cfe'd is reduced in the longitudinal direction, and then transformed into the trapezoid-shaped area. This is performed by enlarging or reducing each line.

So generated trapezoid-shaped image is fitted into a car body image of the composite image taken by the side-area backward cameras, the area to-be-displayed of which is trimmed. This trimming is performed according to the driving speed. Figure 8 shows an example of the trimming. When the driver is driving backward, he/she needs to see a white line for guidance on the road, and therefore the lower portion of the image is necessary. When the car is running at a high-speed, a trimming position is set in the upper portion for viewing a more distant sight as compared to the case where the car is running at a low speed. In this manner, an image composition process performed by the composition unit 14 shown in figure 3 is performed.

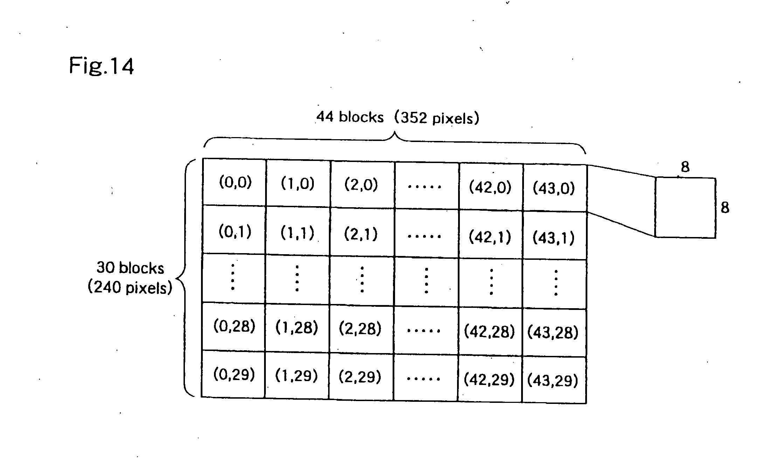

Turning to figure 3 again, the composite image from the image composition unit 14 is displayed on the touch panel display 13. The touch panel has a capability of detecting which camera image area in the composite image has been touched by the driver, and sends touch position information to the control unit 15. According to the touch position information from the display 13, when the composite image is displayed as shown in figure 14, the control unit 15 sends a switching signal for switching to the selected camera image display, to the image composition unit 14, while when one camera image is displayed, it receives the tough signal again and thereby sends the switching signal for switching to the composite image shown in figure 4. Further, according to running speed information of the car, the control unit 15 sends a signal indicating whether the car is running at a high speed or at a low speed, to the image composition unit 14. Also, the control unit 15 sends an image quality control signal to respective camera nodes through the bus control node when it outputs the switching signal. According to the image quality control signal, when the composite image shown in figure 4 is displayed, the respective nodes make image qualities of the corresponding images uniform, and when the image of a camera node is displayed, the camera node performs coding to achieve higher image quality and the other camera nodes make qualities of the corresponding images lower. For instance, when the total bandwidth of the bus is 30Mbps, for image display shown in figure 4, the camera nodes are each directed to perform coding by the use of 6Mbps, or otherwise, the camera node of the display image is directed to perform coding by the use of 14Mbps and the other camera nodes are each directed to perform coding by the use of 4Mbps.

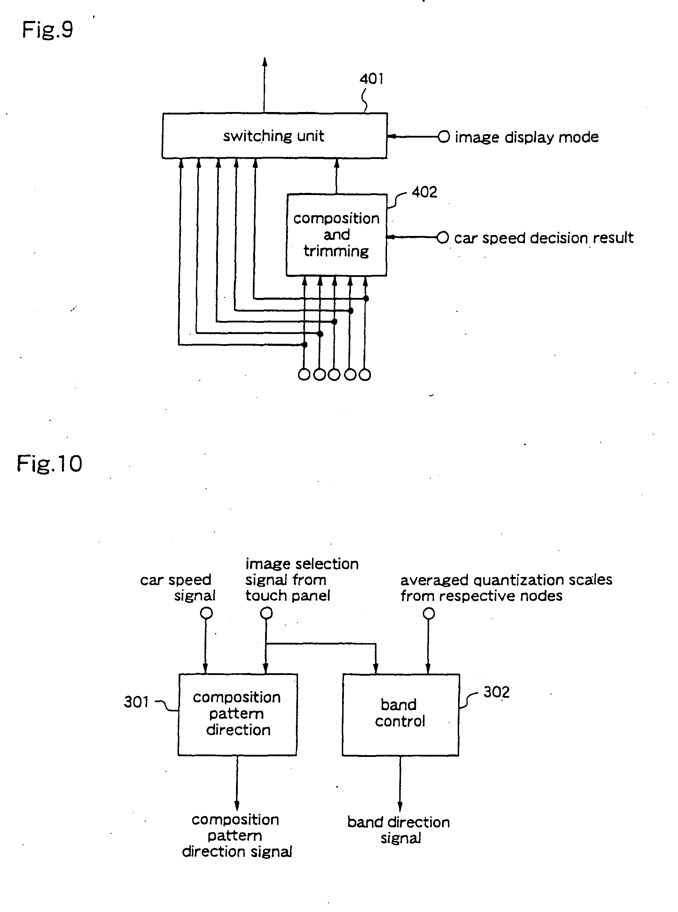

Figure 9 is a diagram showing a structure of the composition unit 14. In figure 9, reference numerals 401 designates a switching unit for switching an output image and 402 designates a composition and trimming unit. The image signals from the respective camera nodes received by the transmission/receiving node 16 and decoded by the decoders (image reproducing units) 17, 18, 19, 20, and 21, are sent to the composition and trimming unit 402, where they are composited and trimmed according to the car speed decision result signal, and then transformed into the composite image shown in figure 4. The composite image is sent to the switching unit 401 together with the images of the respective camera nodes. The switching unit 401 selects an image among 6 images and outputs the selected image according to an image display mode.

Figure 10 is a diagram showing processing performed by the control unit 15. Reference numerals 301 and 302 designate a composition pattern direction unit and a band control unit, respectively. The composition pattern direction unit 301 sends the image display mode and the car speed decision result signal to the composition unit 14 as a composition pattern direction signal, according to the car speed signal and an image selection signal from the touch panel. The band control unit 302 generates a band direction signal to be supplied to the respective camera nodes according to averaged quantization scale signals from respective camera nodes and the image selection signal from the touch panel, and sends the band direction signal to the transmission/receiving node 16 through which it is sent to the respective camera nodes.

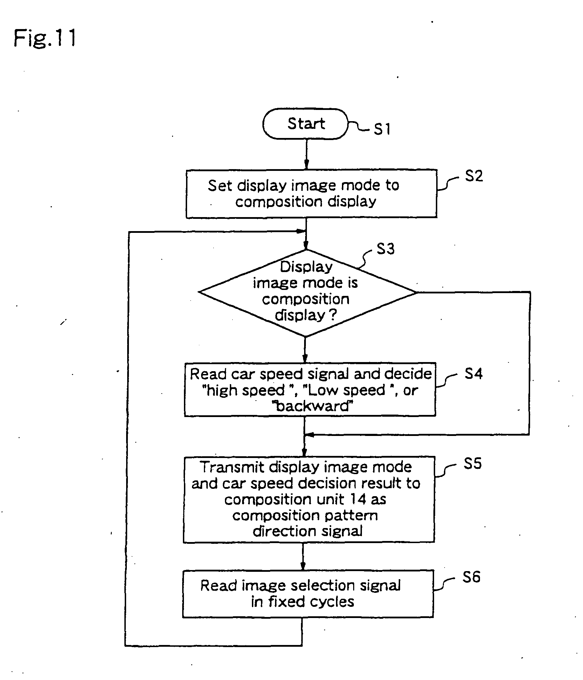

Figure 11 is a flowchart for explaining flow of processing performed by the composition patter direction unit 301. In figure 11, **S1** is a starting process, **S2** is a mode initialization process for initializing the display mode to a composition display mode, **S3** is a decision process for deciding whether or not the display image mode is the composite image display mode, **S4** is a car speed condition decision process for reading the car speed signal and deciding whether the car is running at a high speed, a low speed, or, backward, **S5** is a composition pattern direction signal generation process for generating the composition pattern direction signal and sending the same to the composition unit 14, and **S6** is a reading process for reading the image selection signal.

Hereinafter, the processing flow of the composition pattern direction unit 301 along figure 11. In the initialization process S2, the display image mode is set to the composite image display mode. In the decision process S3, it is decided whether or not the display image mode is the composition display image mode. When decided that the display mode is not the composition display mode, i.e., the mode in which the image from one camera node is displayed, the car speed signal is unnecessary, and therefore advance is made to the composition patter direction signal generation process **S5,** or otherwise advance is made to the car speed condition decision process **S4,** wherein the car speed signal is read and according to the speed, it is decided whether the car is running at a high speed, at a low speed, or backward. For instance, when the car is running at 40 kilometers per hour or more, it is decided that the car is running at the high speed, and when at 40 kilometers or less, it is decided that the car is running at the low speed. Also, when the car is running in the reverse direction, it is decided that the car is running backward. After this decision, advance is made to the composition pattern direction signal generation process **S5,** wherein the signal indicating the set display image mode and the car speed decision result is generated and output to the composition unit 14. In the image selection signal reading process **S6,** after predetermined waiting time elapses, the image selection signal is read and, then processing is returned to the decision process S3. If the predetermined waiting time is set to approximately several milliseconds, then the elapsed (delay) time until the image selection signal is changed according to the selection result of the touch panel display 13 by the user and thereby the display image mode is set, is not felt by the user.

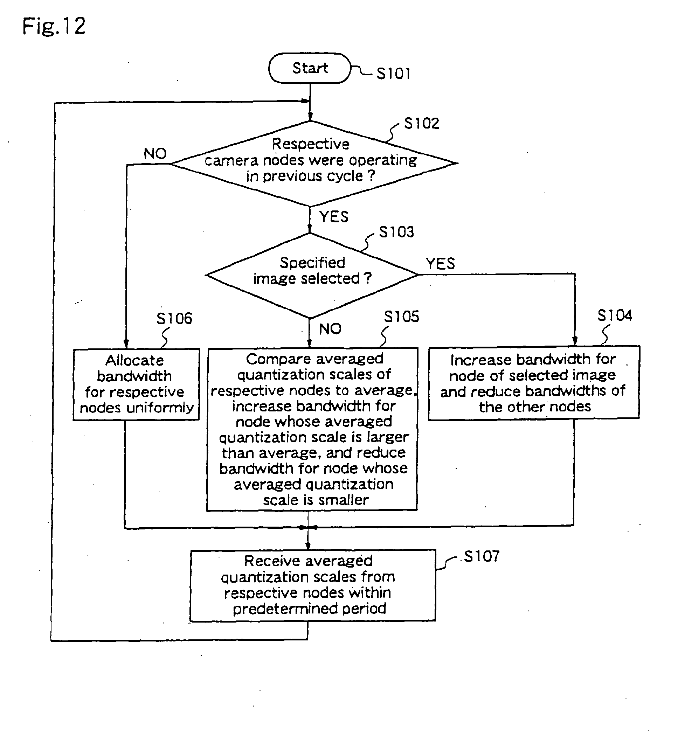

Figure 12 is a flowchart for explaining flow of processing performed by the band control unit 302. In figure 12, **S101** is a starting process, **S102** is a camera operation decision process for deciding whether or not the respective cameras were operating in a previous cycle, **S103** is a display image mode decision process for deciding whether or the display image mode is a mode indicating a specified image, **S104** is a band allocation process for increasing a bandwidth for a selected camera node and reducing a bandwidth for the other camera nodes, **S105** is a band allocation process for allocating bandwidths for respective camera nodes so that image qualities of the images of the respective camera nodes are made uniform, **S106** is a band allocation process for allocating bandwidths for the respective camera nodes uniformly, and S107 is an averaged quantization scale signal receiving process for receiving the averaged quantization scale signal of image signals within a predetermined period which are decoded by the respective decoders in the receiving node.

Hereinafter, flow of the processing performed by the band control unit 302 will be explained along figure 12. Initially, in the camera operation decision process in **S102,** it is checked whether the respective camera nodes were operating for image display. Just after the camera starts operation like when power is ONN, advance is made to the band allocation process **S106,** and the same bandwidth is supplied to the respective nodes as the band direction signal, or otherwise, advance is made to the display image mode decision process **S103.** In the display image mode **S103,** when the display image mode is the mode in which the image of the specified camera node is displayed, advance is made to the band allocation control step **S104.** When the display image mode is the composite image display mode, advance is made to the band allocation process **S105.** In the band allocation process **S104,** the bandwidth for the camera node of the selected image is increased, and the bandwidths for the remaining camera nodes are reduced. When the total transmission bandwidth of the bus is 30MBps and 6Mbps is allocated for each camera node, the control signal is output to the transmission/receiving node 16 to inform the respective camera nodes that 14Mbps is allocated for the camera node of the selected image and 4Mbps is allocated for each of the remaining camera nodes.

In the band allocation process **S105,** the averaged quantization scales sent from the respective decoders are averaged and then comparison is made between the resulting average and the averaged quantization scales of respective decoders. When decided that the averaged quantization scale of a node is larger than the average, it is assumed that the image quality of the corresponding image is lower than those of the other images, and therefore, the transmission bandwidth for the node is increased according to difference with respect to the average. Conversely, when decided that the averaged quantization scale of the node is smaller than the average, since it is assumed that the image quality of the corresponding image is higher than those of the other images, the bandwidth for the node is reduced according to the difference. Assume that 6Mbps is allocated for each camera node and the averaged quantization scales within the fixed period of the respective decoders are "4"," 8", "6", "5", and "7". For instance, using a compression scheme according to MPEG2 standard of an ISO 13818 video compression scheme as a compression scheme, a signal indicating a quantization scale is represented as 5 bits and data of the above averaged quantization scale value is transmitted. In this case, the average is "6" and the transmission bandwidths for the first and fourth camera nodes are reduced. At this time, the transmission bandwidth for the first node is reduced more than that for the fourth bandwidth. Also, the transmission bandwidths for the second and fifth camera nodes are increased. At this time, the bandwidth for the second node is increased more than that for the fifth camera node. In this way, the control signal is output to the transmission/receiving node 16 to inform the respective camera nodes 111 that they update the bandwidths in order to make the image qualities uniform.

In the averaged quantization scale signal receiving process **S107,** the averaged quantization scales from the respective decoders are received and read in the same cycle in which they are updated, and thereafter, processing is returned to the camera operation decision process **S102,** and processing are repeated. As a result, in each fixed period, the appropriate bandwidths are allocated for the respective nodes according to the image display mode. In particular, in the composite image display mode, the uniform image quality of the composite image make boundaries of the images composing it inconspicuous.

Thus, in accordance with the first embodiment, since plural camera images are composited and displayed, image information about the areas around the car with very small blind areas can be provided for the driver. In addition, the image of the touch panel provided on the display screen can be directly touched by the driver, to perform switching to a detailed image and thereby the information can be given to the driver quickly. In this case, since the image quality of the selected camera image is set to be higher when displayed, a preferable image can be provided for the driver even if the bandwidth of the bus cannot ensure sufficient image qualities for the respective images.

While in the first embodiment, the bus is used for video transmission, respective cameras may be individually connected to the display by means of wiring. As the image composition method, another method may be used, in which the blind area is the least obtained and images are placed so that they are visually preferable to the driver. For example, video images of the forward side-area imaging cameras may be placed on opposite end sides to form a panoramic image. Further, the number of the backward imaging cameras which take images of the areas (blind areas) closer to the car body may be increased, and is not limited.

### Embodiment 2.

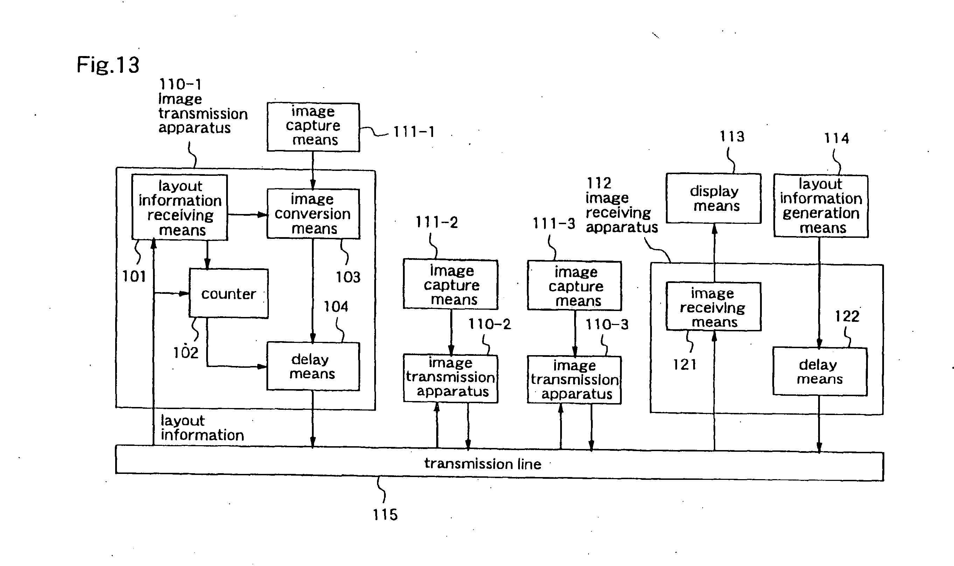

A description will be given of a second embodiment of the present invention with reference to figures 13 through 20.

Figure 13 is a diagram showing construction of an image transmission system according to a second embodiment of the present invention. In figure 13, reference numerals 110-1, 110-2, and 110-3 designate image transmission apparatuses. Reference numerals 111-1, 111-2, and 111-3 designate image capture means. Reference numerals 112, 113, 114, and 115 designate an image receiving apparatus, display means, layout information generation means, and a transmission line, respectively. Reference numerals 101, 102, 103, 104, 121, and 122 designate layout information receiving means, counting means (counter)for counting a packet number, image conversion means, delay means for holding data of at least one packet, image receiving means, and delay means for holding the layout information, respectively.

In the image transmission system of the second embodiment, three image signals captured by the image capture means 111-1, 111-2, and 111-3 are transmitted and composited to be displayed on the display means 113. This composition method is controlled by the layout information generation means 114 with the use of the layout information. The transmission line 115 is divided into access units of a fixed length, and each of the image transmission apparatuses 110-1, 110-2, and 110-3 detect the access unit to be used by itself and transmits the image signal by the use of the access unit. Thereby, the image receiving means 112 receives image information composited in the transmission line. Operation will be described in detail below.

Figure 14 is a diagram for explaining an image handled in the image transmission system according to the second embodiment. The image is a digital image in which one frame comprises (352 × 240) pixels, the ratio of a luminance signal and two chrominance signals is "4:1:1", the number of frames per second is "30", and each pixel is represented as 8 bits. In this image transmission system, this image is divided into (44 × 30) blocks each comprising (8 × 8) pixels. Each block is represented as (horizontal block number, vertical block number). One image is divided into 1320 blocks numbered (0, 0) through (43, 29). Data of each block is 96 bytes ((64 bytes: luminance signal, (2 × 16) bytes: chrominance signals)).

The image to be handled in the system is not limited to this. The image signal may take arbitrary formats as follows. The number of horizontal pixels may be 720 or 1920 and the number of vertical pixels may be 240, 480, or 1080. In addition, the ratio of the luminance signal and the chrominance signals may be "4:4:4", "4:2:2", or "4:2:0". The number of frames per second may be 25,50 or 60. These numbers are arbitrary. When the image signal takes a different format, the number of the blocks or the number of bits in a block changes. Also, when the image cannot be divied into the same blocks, the blocks placed at the end of the image may be changed into rectangle-shaped blocks, or insignificant pixels may be padded. The block may comprises an arbitrary number of pixels such as (4 × 4) pixels, or (32 × 1) pixels. Needless to say, if the size of the block is changed, then the number of blocks or the number of bits in a block correspondingly changes.

The image capture means 111-1, 111-2, and 111-3 are means which captures the images shown in figure 14 and outputs the digital image signal, and is realized by a camera using CCD (charge coupled device) or combination of a camera using an image pick-up tube and analog-to-digital conversion means. The image capture means is not limited to these, and can be realized by arbitrary means which outputs the digital image signal, such as a VTR which contains images, disc player, receiving means of TV broadcasting, and the like.

The image signals captured by the image capture means 111-1, 111-2, and 111-3 are transmitted by the image transmission apparatuses 110-1, 110-2, and 110-3 through the transmission line 115 and received by the image receiving apparatus 112. Operation of the image transmission apparatus 110 and the image receiving apparatus 112 will be discussed in detail later. The image signal output from the image receiving apparatus 112 is displayed on the display means 113.

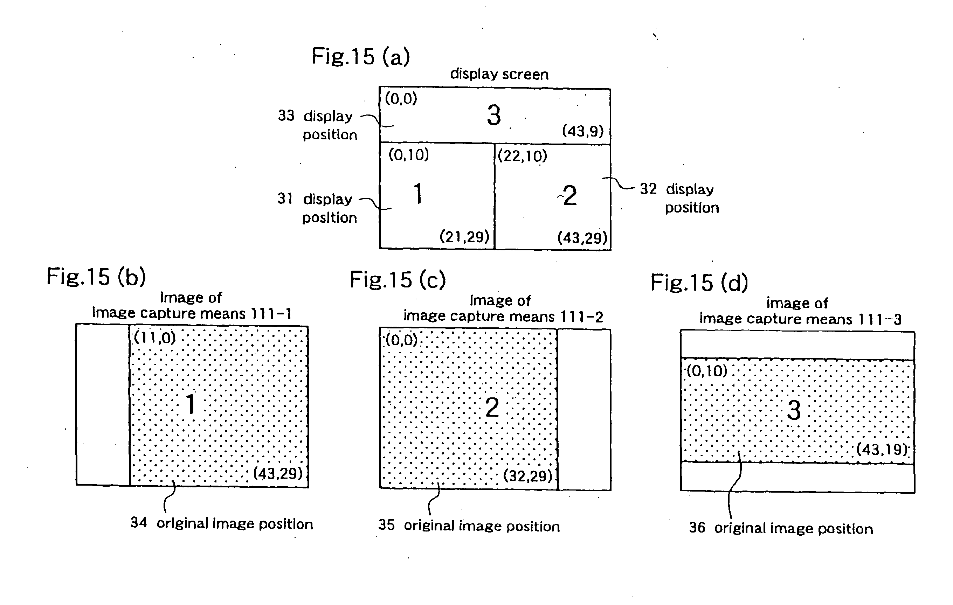

Figures 15(a)-15(d) are diagrams for explaining examples of a layout of the composite image of the image signals output from the respective image capture means 111. Shown in figures 15(b), 15(c), and 15(d) are the images captured by the image capture means 111-1, 111-2, and 111-3, respectively. In these figures, 34, 35, and 36 designate the original image positions, respectively. From the image captured by the image capture means 111-1, the image in the position indicated by the original image position 34 is cut out and displayed in the position indicated by the display position 31. From the image captured by the image capture means 111-2, the image in the position indicated by the original image position 35 is cut out and displayed in the position indicated by the display position 32. From the image captured by the image capture means 111-3, the image in the position indicated by the original image position 36 is cut out and displayed in the position indicated by the display position 33. When the size of the image indicated by the original image position is different from that indicated by the display position, it is reduced, enlarged or transformed, and then displayed. The example shown in figure 15 is only illustrative and not restrictive. Arbitrary layouts can be selected.

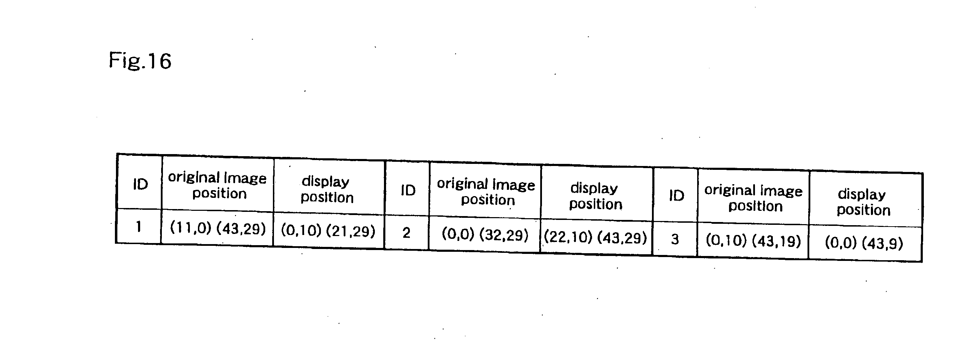

The layout information generation means 114 determines the layout shown in figure 15 and outputs layout information. Figure 16 is a diagram showing an example of the layout information for representing the layout shown in figure 15. The layout information is represented by combination of an identifier ( ID) , the original image position, and the display position, for each image capture means. The original image position and the display position are each represented by the block number located at upper left end and the block number located at the lower right end. In the illustrated example in figures 15(a)-15(d), the ID of the capture means 111-1 is "1", the corresponding original image position is represented by (11, 0) and (43, 29), and the corresponding display position is represented by (0, 10) and (21, 29). In the example, the ID of the capture means 111-2 is "2", the corresponding original image position is represented by (0, 0) and (32, 29), and the corresponding display position is represented by (22, 10) and (43, 29). In the example, the ID of the capture means 111-3 is "3", the corresponding original image position is represented by (0, 10) and (43, 19), and the corresponding display position is represented by (0, 0) and (43, 9). These information is output as the layout information. The method for representing the block numbers is not limited to this, and may be an arbitrary method which can specifies block positions in one image.

For the format of actual layout information, the ID, four numbers indicating the original image position, and four numbers indicating the display position are each represented as "1" byte, and thereby the layout information of one image capture means 111 is represented as "9" bytes. Since three pieces of image capture means 111 is provided in this embodiment, the layout information is 27 bytes in total. When the number of the image capture means increases, data amount of the layout information correspondingly increase. The format of the layout information is not limited to this. The layout information may take any format so long as it contains all the information shown in figure 16 and can be designed freely in the system.

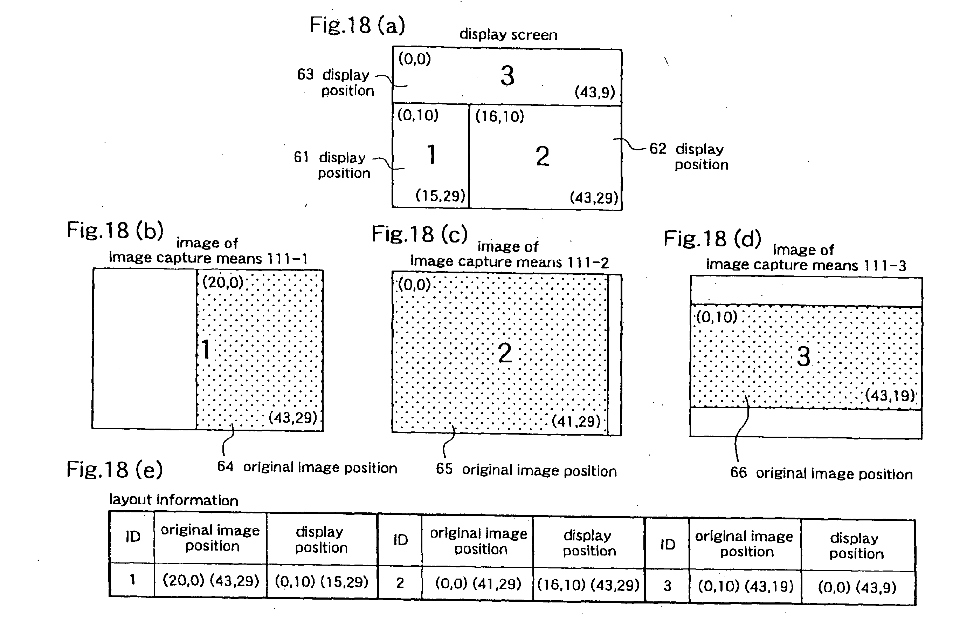

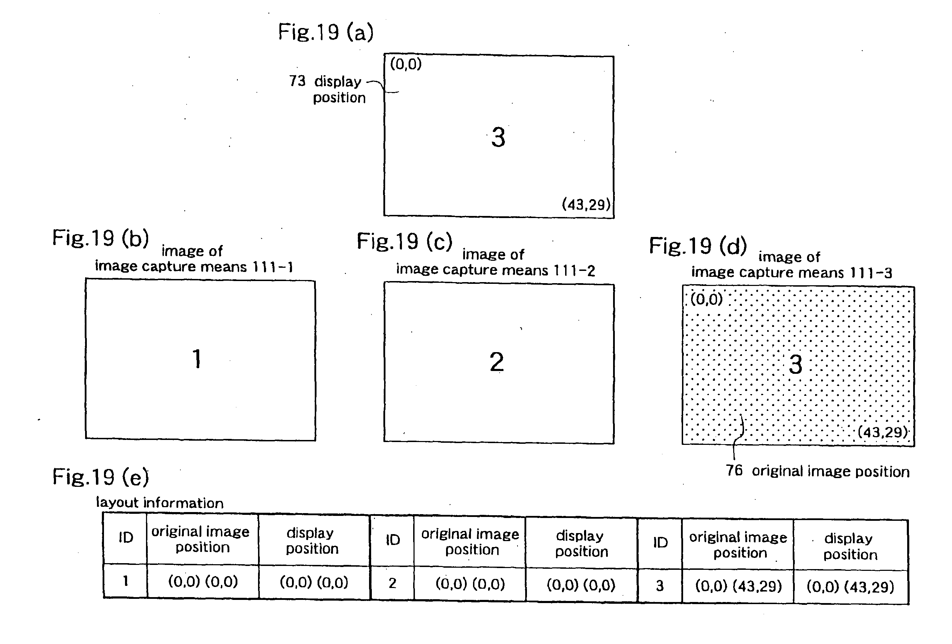

One example of the method for determining the layout performed by the layout information generation means 114 is to output predetermined and stored layout information. Another example is to change the layout by inputting a command associated with the image displayed on the display means 113. For instance, when a command indicating "right direction" is input, the original image position and the display position are changed as shown in figure 18. As shown in the figure, the image is moved in right direction and thereby the original image position 64 in the image of the image capture means 111-1 is changed into (20, 0) and (43, 29), and the corresponding display position 61 is changed into (0, 10) and (15, 29). The original image position 65 in the image of the image capture means 111-2 is changed into (0, 0) and (41, 29), and the corresponding display position 62 is changed into (16, 10) and (43, 29). The resulting layout information is output. When a command indicating the image of the image capture means 111-3 is to be full-screen displayed is input, the original image position and the display position are changed as shown in figure 19. The original image positions and the display positions of the image capture means 111-1 and 111-2 are all changed into (0, 0), and the original image position 76 in the image of the image capture means 111-3 is changed into (0, 0) and (43, 29) and the corresponding display position 73 is changed into (0, 0) and (43, 29). The resulting image information is output.

The method for generating the layout information is not limited to the above-described examples. For instance, according to a command indicating "left direction" , the above change process may be performed likewise; or according to a command indicating "zoom in", the range of the original image may be made smaller. In addition, arbitrary methods other than the method using the command may be used, including a method for changing the layout according to operation of a pointing device, "where humane eyes are turned" or a signal detected by a sensor, or a method for sequentially selecting reading stored layouts may be used. As for the display position, the entire screen need not be filled with images and there may be some areas which are not selected as the display position on the screen. Such areas may be used for displaying characters.

In the illustrated example, the images indicated by the original image positions are cut out from the images captured by the image capture means 111, and then enlarged or reduced according to the size of the display position. Alternatively, the images captured by the image capture means 111 may be directly enlarged or reduced. In this case, how to display respective image on the composite image is somewhat restricted, but there is no need for the layout information to contain the original image position information, and therefore the number of bytes of the layout information can be reduced.

Subsequently, a description will be given of operation of the image transmission apparatuses 110-1, 110-2, and 110-3, and the image receiving apparatus 112.

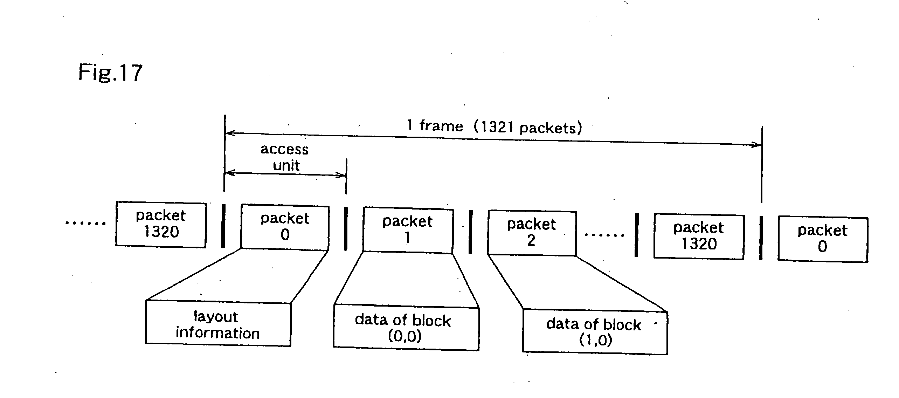

Figure 17 is a diagram for explaining signal transmission in the image transmission system of this embodiment. The transmission line is divided into access units. The transmission line is an arbitrary transmission line on which any apparatus connected thereto uses an access unit to transmit a packet, and includes at least 1321 access units per frame time (per 1/30 sec). Each access unit is used to transmit a packet of one block data length (96 bytes). One frame time varies depending upon formats of image signals and one block data length also varies depending upon the formats of the image signals and the division methods of the block. When a transmission line in which a transmission unit is smaller than the one block data length is used, plural transmission units may be used to transmit one packet. When this transmission line is used, connection to the apparatus may be arbitrary such as ring type connection, bus type connection, star type connection, and the like, and a physical medium of the transmission line may be a wire (electric code like as twist paired line, or optical fiber) or wireless (radio or infrared ray).

In the image receiving apparatus 112, the delay means 122 measures one frame time and outputs the layout information output from the layout information generation means 114 once per frame. The layout information is transmitted as a packet of 96 bytes, but if the layout information for all the image transmission apparatuses is not stored in one packet, plural packets are used. In this case, the minimum value of the access unit per frame time needs to be increased with increasing packets. When the layout information is stored in two packets, at least 1322 access units are necessary per frame time.

In the image transmission apparatus 110-1, the layout information receiving means 101 receives the layout information through the transmission line 115 and outputs the original image position and the display position of the ID of the corresponding apparatus. The image conversion means 103 cuts out data indicated by the original image position from the image signal output from the image capture means 111-1 and convert the cut-out image into data of the size indicated by the display position by frame drop or interpolation of pixels. To do drop or interpolation of pixels, some digital filter may be used. When the layout information receiving means 101 outputs the display position, the counter 102 sets its value to "0" and increases its value by "1" for each access unit with which the corresponding apparatus can perform transmission. When the counter's value is in the range indicated by the input display position, the counter 102 transmits "output direction" to the delay means 104. Assuming that the counter's value is a packet number, a block (x, y) in an image is expressed as (x + y × 44 + 1). Also assuming that the packet number is "z", x = (z - 1) mod 44 and y = (z - 1)/44, where mod44 is the remainder of division by 44, "/44" is division of integers in which a result (quotient) of division by 44 is rounded down to an integer. When thus calculated (x, y) is in the range indicated by the display position, the counter 102 sends "output direction" to the delay means 104.

When the delay means 104 receives the "output direction" from the counter 102, transmission means 106 transmits one block of the converted image signal output from the image conversion means 103 as a packet.

The image transmission apparatuses 110-2 and 110-3 operate in the same manner that the image transmission apparatus 110-1 operates, according to the original image position and display position of the ID of the corresponding node which are included in the layout information.

The image receiving apparatus 112 receives the layout information and 1320 packets following the layout information, i.e., packets 1-1320, and generates one screen image, which is displayed on the display means 113. The image displayed on the display means 113 is the composite image of the images of the image capture means 111-1, 111-2, and 111-3 generated according to the layout information of the layout information generation means 114, that is, according to the layout shown in figure 15(a). Thereafter, the same processing is repeated for each frame.

On the transmission line 115, identifiers (IDs) for identifying the packet of the layout information and the packet of the image information are required. The identifiers may be realized by arbitrary methods in which the layout information and the image information can be identified. For example, all the packets may include identifiers or only the packets of the layout information may include identifiers of relatively long data length.

For composition of images to be displayed on the display means 113, that is, for change of the layout, it is necessary that the layout information generation means 114 change the layout information. Hence, the layout can be changed dynamically with ease. In addition, since the composition is made on the transmission line, the transmission line is occupied only by the bandwidth for one image, and the bandwidths or delay will not increase with an increase in the number of image capture means.

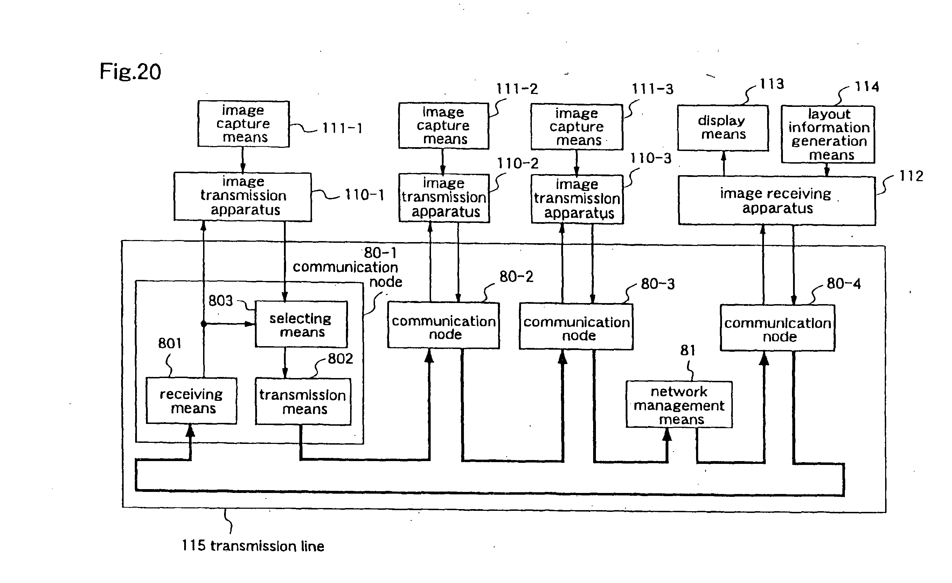

A description will be given of a specific example of the transmission line 115 implemented by the use of a ring type network. Figure 20 is a diagram for explaining a detailed structure of a transmission line in the image transmission system of this embodiment. In figure 20, reference numerals 110-1, 110-2, and 110-3 designate image transmission apparatuses, 111-1, 111-2, and 111-3 designate image capture means, 112 designates an image receiving apparatus, 113 designates display means, and 114 designates layout information generation means. These components are identical to those referred to by the same numbers shown in figure 13 and operates in a like manner. Reference numeral 115 designates a transmission line, in which 80-1, 80-2, 80-3, and 80-4 designate communication nodes and 81 designates a network management apparatus.

Each communication node 80 has a unique address. Suppose that addresses of the communication nodes 80-1, 80-2, 80-3, and 80-4 are #1, #2, #3, and #4, respectively. The network management apparatus 81 is used to set access units and output a token indicating a transmission address (SA) and a receiving address (DA) at regular time intervals. The token is transmitted to every communication node 80, and is finally returned to the network management means 81, where it is discarded. The communication node 80, since its address matches the SA, transmits a packet subsequently to the token. The packet is also transmitted to every communication node 80, and is finally returned to the communication node 80 which has transmitted the packet, where it is discarded. The communication node 80 whose address matches the DA, receives the packet.

As the SA and the DA, it is possible to set group addresses. When the group address is set in the SA, any of the apparatus belonging to the corresponding group can perform transmission and when the group address is set in the DA, all of the apparatus belonging to the corresponding group can perform receiving. Here it is assumed that the group address comprising #1, #2, #3, and #4 is #G. The network management apparatus 81 outputs 1321 tokens (SA and DA = #G) during one frame time period, i.e., for 1/30 sec. The frame time and the number of tokens output during one frame time period are not limited to these and varies depending upon the format of the image signal to be handled or the block to be used. In addition, the addresses are not limited to the above-described number, either. Further, the network management apparatus need not always sequentially output these tokens so long as it outputs 1320 tokens (SA and DA = #G) during one frame time period. Moreover, tokens which specify address (SA or DA ≠ #G) can be output, and thereby another communication becomes possible on the transmission line 115.

In the communication node 80-1, the packet received by the receiving means 801 is sent to the image transmission apparatus 110-1 and the selecting means 803. When the SA of the token indicates the #G and data is input from the image transmission apparatus 110-1, the selecting means 803 outputs the data, or otherwise, it outputs the packet received by the receiving means 801. The communication nodes 80-2, 80-3, and 80-4 operate as in the case with the communication node 80-1.

The transmission line in the image transmission system of the second embodiment is thus constructed. The transmission line for use by the present invention is not limited to these and may use the ring type network, the bus type network, or the star type network. Arbitrary transmission line may be used provided that the transmission line is time-shared into access units, any apparatus connected thereto uses the access unit to transmit the packet, the transmission line includes at least 1321 access units during one frame time period, that is, for 1/30 sec, and the packet of at least one block data length (96 bytes) is transmitted by the use of the access unit.

The image capture means 111-2 and the display means 113 generate a frame synchronization signal based on timing at which the layout information is transmitted, although this is not shown. Thereby, a frame memory for correcting lack of synchronization of frames is unnecessary, which realizes a small-scale circuit.

Thus, in accordance with the image transmission system of the second embodiment, it is possible to composite the image signals captured by the plural image capture means connected to the transmission line thereon, and the bandwidth or delay due to the processing on the transmission line is not affected by the number of the connected image capture means. In addition, it is possible to construct the image transmission system which can dynamically change the composition method with ease.

The access units of the transmission line 115 can be used by another communication apparatus, as well as by the image transmission apparatus 110 and the image receiving apparatus 112. In this case, the respective image transmission apparatuses 110-1, 110-2, and 110-3 are adapted to use the access units in the order of the positions indicated by the display positions. For instance, this is realized by identifying access units which can be used by the image transmission system of this embodiment and access units which can be used by another communication according to identifiers and by the use of the counter 102 which increases its value by "1" for each access unit which can be used by the image transmission apparatus of this embodiment. Alternatively, the counter 102 may increase its value by "1" when it detects the access unit with which the image transmission apparatus 110-1, 110-2, or 110-3 on the transmission line 115 has performed transmission. Such construction allows the transmission line to be shared by the system of this embodiment and another communication.

While the network management apparatus (transmission line) 81 transmits the token for specifying the group address including the addresses of the image transmission apparatus 110-1, 110-2, and 110-3 and the image receiving apparatus 112, another construction is possible. For instance, the network management apparatus 81 may calculate the order in which the respective image transmission apparatuses 110 perform output operation according to the layout information output from the layout information generation means 114 and set the addresses of the image transmission apparatuses 110 in the SAs of respective tokens according to the order, and thereby the same effects can be provided. In this case, the counter 103 is unnecessary in the respective image transmission apparatuses.

While in this embodiment, the layout information generation mans 114 is connected to the image receiving apparatus 112, another construction is possible. For instance, arbitrary construction may be employed so long as the layout information is transmitted at one frame time intervals. For instance, the layout information generation means 114 may directly output the layout information to the transmission line 115, and the same effects can be provided. In addition, the layout information may be transmitted on a transmission line different from the transmission line on which the image signal is transmitted.

While in this embodiment frames are synchronized according to the layout information, a packet or a signal for frame synchronization may be set and the counter 102 may reset its value to "0" according to this frame synchronization. In this case, the layout information may be transmitted at arbitrary timing, and arbitrary construction may be employed so long as all the image transmission apparatuses 110 update the layout information at the same timing. For instance, each of the image transmission apparatuses 110 updates the layout information at the head of a subsequent frame.

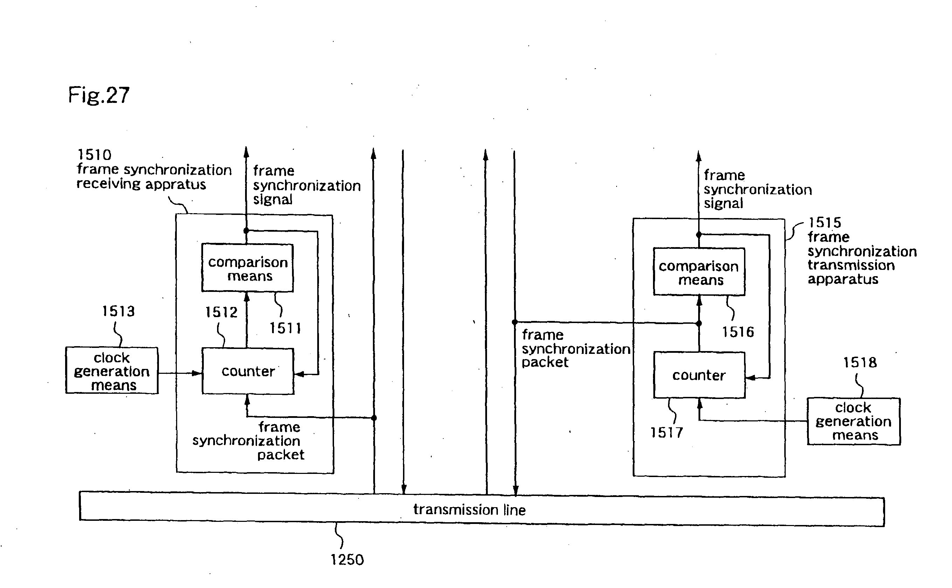

Figure 27 shows an example of a method for sharing the frame synchronization signal. In figure 27, reference numeral 1510 designates a frame synchronization receiving apparatus, 1515 designates a frame synchronization transmission apparatus, 1511 and 1516 designate comparison means, 1512 and 1517 designate counters, and 1513 and 1518 designate clock generation means. One frame synchronization transmission apparatus 1515 and at least one frame synchronization receiving apparatuses are connected to one transmission line. The frame synchronization transmission apparatus 1515 and the frame synchronization receiving apparatus 1510 supply the frame synchronization signals to the image transmission apparatus and the image receiving apparatus, respectively.

In the frame synchronization transmission apparatus 1515, the clock generation means 1518 generates the clock, which is counted by the counter 1517. The clock generation means 1518 is implemented by a crystal for outputting a fixed clock or a PLL (phase-locked loop) device for generating a clock based on a reference signal transmitted on the transmission line at regular intervals. For the value of the counter 1517, comparison is made by the comparison means 1516, and when it is found that the counter's value matches the value of a frame frequency, the comparison means 1516 outputs the frame synchronization signal. The value of the counter 1517 is cleared by the frame synchronization signal. The value of the counter 1517 is transmitted toward the transmission line as a frame synchronization packet. The frame synchronization packet indicates "offset" from the frame synchronization signal.

In the frame synchronization receiving apparatus 1510, the clock generation means 1513, the counter 1512, and the comparison means 1511 generate the frame synchronization signal like the frame synchronization transmission apparatus 1515. The difference between them is that the value of the received frame synchronization packet is preset in the counter 1512 in the receiving apparatus 1510. Thereby, the values of the counters 1512 and 1517 of the frame synchronization receiving apparatus 1510 and the frame synchronization transmission apparatus 1515 are always the same, and the frame synchronization signals of the same phase are output from respective nodes.

It is required that the frame synchronization packet be transmitted at least once when the system is activated. Thereafter, it is transmitted at arbitrary intervals. The intervals may be determined according to precision of the clock generated by the clock generation means and target reliability.

The frame synchronization transmission apparatus 1515 and the frame synchronization receiving apparatus 1510 are applicable to arbitrary image transmission systems as well as the image transmission system of this embodiment, and the frame synchronization signals of the same phase are obtained by plural nodes connected to the transmission line.

While in this embodiment the image signal is not compressed when transmitted, the image signal is not limited to this. For instance, the image transmission apparatus 110 may compressively encode the image signal block by block and then transmit the compressively encoded signal, which may be decompressed by the image receiving apparatus 112 and then displayed. This reduces the amount of data of each block to be transmitted, and thereby reduces the amount of data of the packet to be transmitted by the use of each access unit, resulting in the reduced bandwidth to be used.

Another example of the transmission line 115 is IEEE1394. The IEEE1394 is a bus-type transmission line with a cycle time of 125 microseconds. For transfer of the synchronization data, channels are set, and time period in each cycle during which bus is occupied by each channel is determined. Each apparatus connected to the transmission line uses the channel to transfer data. When the IEEE 1394 is used as the transmission line in the image transmission system of this embodiment, plural channels are used. For each channel, as occupation time of the bus in each cycle, time period corresponding to 96 bytes or more is set, and each image transmission apparatus uses the channel to transmit a packet of 96 bytes. The number of channels to be prepared is equal to the number of packets to be transmitted in each cycle time or more. The above-described construction implements the transmission line 115 of this embodiment.

Still another example of implementation of the transmission line 115 is discussed. The transmission line is divided into frames, each of which is further divided into slots, and slots in the frame which can be used by the apparatus connected to the transmission line are specified in advance. When this transmission line is applied to the transmission system of this embodiment, it is necessary to determine slots with which any image transmission apparatus performs transmission and an image receiving apparatus performs receiving and slots with which an image receiving apparatus performs transmission and all image transmission apparatuses performs receiving. The slot corresponds to the access unit on the transmission line 115, and when it is used in the image transmission line system, the slots are set so that each slot is used to transmit data of 96 bytes or more and 1321 slots or more are present per 1/30 sec.

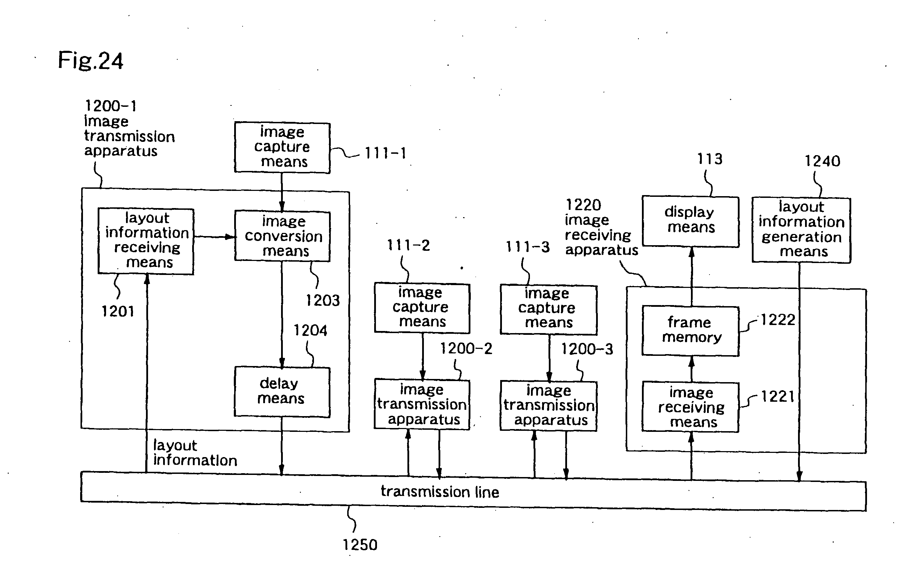

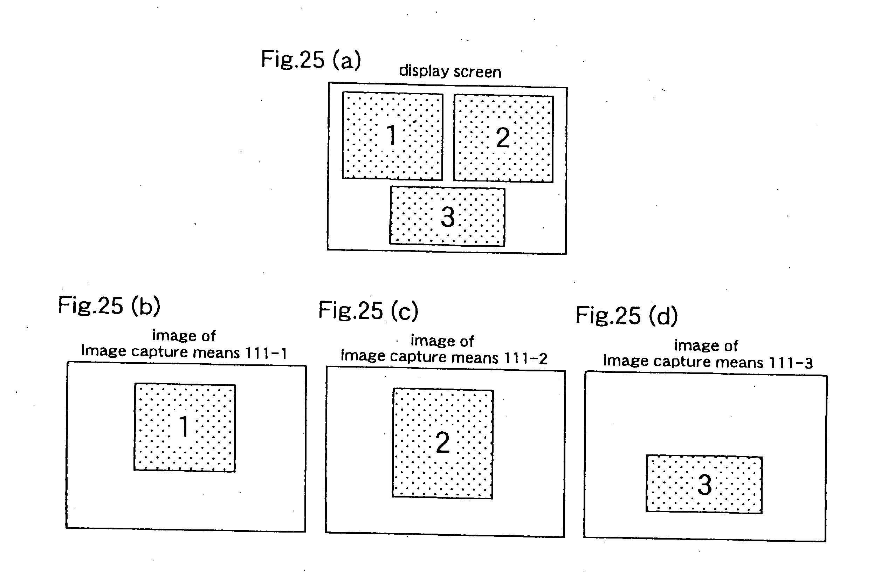

While the transmission line 115 is divided into plural access units and the image transmission apparatus 110 uses the access unit corresponding to the display position according to the layout information in order to transmit the image signal toward the transmission line 115, the construction of the present invention is not limited to this. For instance, the image transmission apparatus 110 may cut out the image in the position according to the layout information from one image and transmit only the cut-out image toward the transmission line 115 at arbitrary timing at which it can be transmitted, while the image receiving apparatus 112 may use storage means such as a frame memory to generate one display image from the image signals transmitted from the image transmission apparatuses 110. This is applicable to arbitrary transmission line and reduces the bandwidth to be used on the transmission line 115. Examples of such construction is shown in figures 24 and 25.

Figure 24 is a diagram showing another example of the image transmission system of this embodiment. In figure 24, reference numerals 111-1, 111-2, and 111-3 designate image capture means, and 1200-1, 1200-2, and 1200-3 designate image transmission apparatuses. Reference numerals 1201, 1203 , 1204, 1220, 1221, 1222, 113, 1240, and 1250 designate layout information receiving means, image conversion means, delay means, an image receiving apparatus, image receiving means, a frame memory, display means, layout information generation means, and a transmission line, respectively.

Hereinafter, a description will be given of difference between operation of the image transmission system shown in figure 24 and operation of the image transmission line shown in figure 12. Note that the layout information contains at least the original image position of the layout information shown in figure 16.

First, operation of the image transmission apparatus 1200-1 is described. The layout information receiving means 1201 gives the original image position indicated by the layout information received through the transmission line 1250, to the image conversion means 1203. The image conversion means 1203 cuts out only the image corresponding to the area indicated by the original image position from the image captured by the image capture means 111-1 and outputs the cut-out image to the delay means 1204. The delay means 1204 outputs the image signal to the transmission line at timing when it can be output thereto. The image signal may be uncompressed or may be compressed, and then transmitted. The delay means 1204 is not always required. For instance, when the transmission line 1250 toward which the image signal can be transmitted at arbitrary timing is used, or when the image convers ion means 1203 or image capture means 111-1 is capable of storing information and outputting the information to the transmission line 1250 at timing when it can be output, the delay means 1204 is unnecessary.

The image transmission apparatuses 1200-2 and 1200-3 operate like the image transmission apparatus 1200-1.

The layout information generation means 1240 generates only the display information of the layout information generated by the layout generation means 14 which has been described for the image transmission system shown in figure 12. The transmission line 1250 is an arbitrary transmission line on which digital information is transmitted.

Subsequently, operation of the image receiving apparatus 1220 is described. The image receiving means 1221 receives image information including at least parts of the images which are transmitted from the respective image transmission apparatus. The received image information is written onto the frame memory 1222 in the position according to the display position. The image receiving means 1221 may perform arbitrary processing for the image signal before being written onto the frame memory, such as change of the image size in longitudinal or lateral direction, conversion of a luminance value or color of pixels, or image cut-out. The image written onto the frame memory 1222 is displayed on the display means 113.

Thus, in accordance with the image transmission system shown in figure 24, the bandwidth to be used on the transmission line 1250 can be reduced.

While the layout information generation means 1240 transmits the layout information including the original image position indicating the position of the image, the layout information may include information of a display size of the image. In this case, the image conversion the image conversion means 1203 cuts out the area in the original image position from the image, and when the display size is smaller than the size of the image in the original image position, it converts the cut-out image into the image of the display size and outputs the converted image. This further reduces the bandwidth required on the transmission line 1250. Of course, the layout information generation means 1240 may output information indicating the display size only when the display size is smaller than the size of the image in the original image position.

The image transmission system shown in figure 24 is applicable to an arbitrary system wherein at least parts of the images captured by the image capture means 111-1, 111-2, and 111-3 are cut out from them and composited and displayed as shown in figure 25(a). This means that the display image composition and image cut-out are not restrictive. In addition, this system can reduce the bandwidth required on the transmission line as compared to a system in which each of the image transmission apparatuses 110 connected to the transmission line 1250 transmits an image signal corresponding to one image. As the transmission line 1250 to be used, an arbitrary transmission line which can transmit digital information can be used.

The construction of the image transmission apparatus 1200 may be arbitrary so long as it cuts out the image in the position according to the layout information from entirely one image and transmits only the cut-out image toward the transmission line. The construction of the image receiving apparatus 1220 may be arbitrary so long as it forms one display image from at least one received image signals. These constructions are not limited to that shown in figure 24 and the same effects can be provided.

Needless to say, the image capture means and the image transmission apparatus shown in figure 12 or 24 may be constructed as one single apparatus. This is called an image capture apparatus. The construction of the image capture apparatus is not limited to that described of the image transmission system shown in figure 12 o,r 24. With arbitrary construction in which the information of the image cut-out position is input externally and the image signal corresponding to the cut-out image is output, the same effects can be provided.

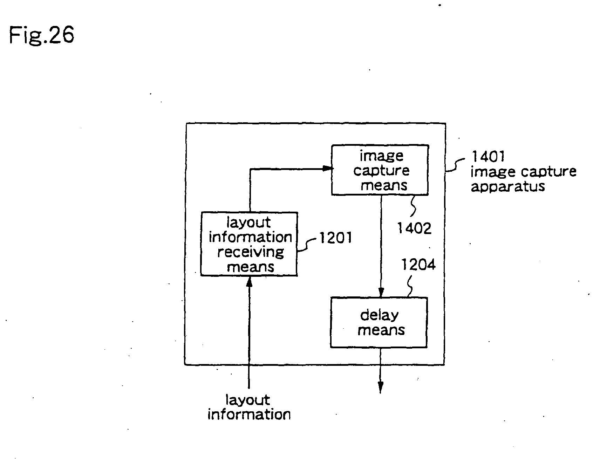

As another example of the image capture apparatus, the image conversion means 1203 may be dispensed with and the image capture means 111 may output only the image signal corresponding to the area in the original image position. This example is shown in figure 26.

In figure 26, reference numerals 1401, 1201, 1402, and 1204 designate an image capture apparatus, layout information receiving means, image capture means, and delay means, respectively. Operations of the layout information receiving means 1201 and delay means 1204 are identical to those referred to by the same numerals in figure 24. The image capture means 1402 outputs digital image signal of the area in the original image position from the layout information receiving means 1202 and transmits the digital image signal through the delay means 1204. For instance, when the image capture means 1402 is image capture means such as a CCD or an image pickup tube, it performs scan operation to read only the digital image signal in the display position and outputs the read digital image signal.

In this way, as the image capture means 1401, the image capture apparatus 1402 which captures the area in the original image position and outputs the image signal may be used. This realizes an image transmission system in which the same effects can be provided without the use of the image conversion means.

Furthermore, a description will be given of a case where the image transmission system of the second embodiment is applied to the on-vehicle display apparatus of the first embodiment.

The image transmission system of the second embodiment can be applied to the on-vehicle display apparatus. To be specific, in respective camera nodes of the display apparatus, the images in required positions are cut out from the images taken by the cameras, and transmitted toward the bus, while in the video display node, the cut-out images are composited. In this case, the signal indicating the positions of the images to be cut out in the respective camera nodes may be sent from the video display node. Using the image transmission system shown in figure 12, the respective camera nodes use the access units on the bus corresponding to the positions in which the image signals to be displayed in order to transmit the image signals, in which case, the cut-out positions are restricted block by block, but memories for composition can be reduced in the video display node. In addition, using the image transmission line shown in figure 24, the respective camera nodes are capable of performing transmission at arbitrary timings toward the bus, and thereby arbitrary cut-out positions can be set.

Thus, the image transmission system of the second embodiment and the on-vehicle display of the first embodiment are used in combination, whereby the effects provided by the respective embodiments are realized simultaneously.

### Further embodiments

Embodiment 1. An on-vehicle image display apparatus comprising:
plural cameras;
display image creating means for compositing and cutting out a group of images taken by the respective cameras; and
image display means, wherein
the display image creating means cuts out images which compensate for blind spots of the respective cameras in imaging positions one another, from the plural images of the plural cameras, and composite the cut-out images.

Embodiment 2. The on-vehicle display apparatus with the features of embodiment 1 wherein
the plural cameras include a left-side area backward imaging camera for taking an image of an area in a backward direction from a left-side area of a car body, a right-side area backward imaging camera for taking an image of an area in a backward direction from a right-side area of the car body, and a backward imaging camera for taking an image of an area in a backward direction from a rear portion of the car body, and
the display image creating means composites the images of the left-side area backward imaging camera, the right-side area backward imaging camera, and the backward imaging camera.

Embodiment 3. The on-vehicle image display apparatus with the features of embodiment 2 wherein
the display image creating means cuts out an image which compensates for the blind spots of the car body for the left-side area backward imaging camera and the right-side area backward imaging camera, from the image taken by the backward imaging camera, cuts out images which compensate for blind spots outside a view angle of the backward imaging camera, from the images taken by the left-side area backward imaging camera and the right-side area backward imaging camera, and composites the cut-out images.

Embodiment 4. The on-vehicle image display apparatus with the features of embodiment 1 further comprising:
touch detecting means provided on an image display screen of the image display means; and
image display control means for performing switching of a displayed image according to a detection result of the touch detecting means, wherein
the touch detecting means detects a position of an image on the image display screen which is touched by a user, and the image display control means displays an original image of the image displayed in the position in a composite image which has been detected by the touch detecting means, on the display screen.

Embodiment 5. The on-vehicle image display apparatus 2 wherein the side-area backward imaging camera, the right-side area backward imaging camera, and the backward imaging camera have the same view angles, and the backward imaging camera is placed at a point where a view border of the left-side area backward imaging camera on the car body side and a view border of the right-side area backward imaging camera on the car body side are intersected, and
the display image creating means performs composition in such a way that car body portions in the images of the right-side area backward imaging camera and the left-side area backward imaging camera are overlapped and connected and an image area in the image of the backward imaging camera is fitted into an image area corresponding to a car body portion in a central portion of the connected images.

Embodiment 6. The on-vehicle image display apparatus with the features of embodiment 4 wherein
the respective cameras include image compressive coding means for compressively coding an image signal,
the images of the respective cameras are transmitted to the display image creating means through common transmission means on which image signals are transmitted, and
the image display control means, when the composite image is displayed, controls compression ratios of the image compressive coding units included in the respective camera units so that a transmission band of the transmission means is shared for image transmission of the respective camera units in order to make image qualities of the images of the respective cameras uniform, and when a specified camera image is selected, it performs control so that an image quality of the selected image is made higher.

Embodiment 7. The on-vehicle image display apparatus with the features of embodiment 1 wherein
the display image creating means changes the area of the image to be cut out in the composite image according to a speed at which a car is running.

Embodiment 8. An image transmission system comprising a transmission line, at least one image capture apparatus connected to the transmission line, wherein
the image capture apparatus receives an image signal and layout information including original image information for specifying a cut-out position of an image signal to be cut out from the received image signal as inputs and outputs the image signal in the cut-out position toward the transmission line.

Embodiment 9. The image transmission system with the features of embodiment 8 wherein said system includes at least one image receiving apparatus connected to the transmission line, and the image receiving apparatus includes image generation means for generating an image from the image signals through the transmission line.

Embodiment 10. An image transmission system comprising a transmission line and at least two image transmission apparatuses connected thereto, wherein
the transmission line is time-shared into plural access units and an apparatus connected to the transmission line uses the access unit to transmit a packet, and
the image transmission apparatuses each receives an image signal and layout information including a display position indicating a position of the image signal in a composite image, converts the image signal into an image signal of the size according to the display position, counts the number of the access units, and outputs the converted image signal at timing according to the display position.

Embodiment 11. The image transmission system with the features of embodiment 10 wherein
said system includes a layout information generation unit which outputs layout information including display positions of images of plural transmission apparatuses.

Embodiment 12. The image transmission system with the features of embodiment 11 wherein
the layout information generation unit outputs layout information once per frame.

Embodiment 13. The image transmission system with the features of embodiment 10 wherein the transmission line is a ring type network.

Embodiment 14. The image transmission system with the features of embodiment 10 wherein
the image transmission apparatus includes image conversion means which converts a size of an image according to the layout information, and delay means which counts the number of usable access units and outputs the converted image when the number of the usable access units is in a range corresponding to the display position.

Embodiment 15. The image transmission system with the features of embodiment 10 wherein
the layout information includes original image positions for specifying cut-out positions of images to be cut out from image signals, and
the image transmission apparatus cuts out the image signal in the position specified by the original image position and converts the cut-out image into the image of the display size.

Embodiment 16. An image transmission system comprising a transmission line on which packets are transmitted, at least one frame synchronization signal receiving apparatus, and a frame synchronization signal transmission apparatus, wherein
the frame synchronization signal transmission apparatus outputs a value indicating temporal difference with respect to the frame synchronization signal toward the transmission line as a frame synchronization packet, and
the frame synchronization signal receiving apparatus, when it receives the frame synchronization packet, adjusts a phase of the frame synchronization signal based on the value.

Embodiment 17. The image transmission system with the features of embodiment 16 wherein
the frame synchronization signal transmission apparatus includes a first counter for counting the number of clocks, and a first comparison unit which compares a value of the first counter to a predetermined fixed value and outputs the frame synchronization signal when there is match between the value of the first counter and the predetermined fixed value, and outputs the value of the first counter toward the transmission line as the frame synchronization packet, and
the frame synchronization signal receiving apparatus includes a second counter for counting the number of clocks, and a second comparison unit which compares a value of the second counter to a predetermined fixed value and outputs the frame synchronization signal when there is match between the value of the second counter and the predetermined fixed value, and when it receives the frame synchronization packet, the receiving apparatus presets its value in the second counter.

Embodiment 18. An image transmission apparatus connected to a transmission line which is time-shared into plural access units and an apparatus connected thereto uses the access unit to transmit a packet, wherein
said apparatus receives an image signal and layout information including a display position indicating a position of the image signal in a composite image as inputs, converts the image signal into an image signal of the size according to the display position, counts the number of access units, and outputs the converted image signal at timing according to the display position.

Embodiment 19. The image transmission apparatus with the features of embodiment 18 wherein
said apparatus includes image conversion means which converts a size of the image according to the layout information, and delay means which counts the number of usable access units, and outputs the converted image when the number of the usable access units is in a range corresponding to the display position.

Embodiment 20. The image transmission apparatus with the features of embodiment 18 wherein said apparatus receives layout information including an original image position for specifying a cut-out position of an image signal to be cut out from the image signal, cuts out the image signal in the position specified by the original image position, and then converts the cut-out image signal into the image signal of the size according to the display position.

Embodiment 21. An image transmission apparatus which receives an image signal and layout information including original image information for specifying a cut-out position of an image signal to be cut out from the received image signal as inputs, and outputs the image signal in the cut-out position.

Embodiment 22. An image capture apparatus which captures an image signal of a real image and receives layout information including original image information for specifying a cut-out position of an image signal to be cut out from the captured image signal as an input, and outputs the image signal in the cut-out position.

## Claims

1. An image transmission system comprising a transmission line, at least one image capture apparatus connected to the transmission line, wherein
the image capture apparatus receives an image signal and layout information including original image information for specifying a cut-out position of an image signal to be cut out from the received image signal as inputs and outputs the image signal in the cut-out position toward the transmission line.

2. The image transmission system of Claim 1 wherein said system includes at least one image receiving apparatus connected to the transmission line, and the image receiving apparatus includes image generation means for generating an image from the image signals through the transmission line.

3. An image transmission system comprising a transmission line and at least two image transmission apparatuses connected thereto, wherein
the transmission line is time-shared into plural access units and an apparatus connected to the transmission line uses the access unit to transmit a packet, and
the image transmission apparatuses each receives an image signal and layout information including a display position indicating a position of the image signal in a composite image, converts the image signal into an image signal of the size according to the display position, counts the number of the access units, and outputs the converted image signal at timing according to the display position.

4. The image transmission system of Claim 3 wherein
said system includes a layout information generation unit which outputs layout information including display positions of images of plural transmission apparatuses.

5. The image transmission system of Claim 4 wherein
the layout information generation unit outputs layout information once per frame.

6. The image transmission system of Claim 3 wherein
the transmission line is a ring type network.

7. The image transmission system of Claim 3 wherein
the image transmission apparatus includes image conversion means which converts a size of an image according to the layout information, and delay means which counts the number of usable access units and outputs the converted image when the number of the usable access units is in a range corresponding to the display position.

8. The image transmission system of Claim 3 wherein
the layout information includes original image positions for specifying cut-out positions of images to be cut out from image signals, and
the image transmission apparatus cuts out the image signal in the position specified by the original image position and converts the cut-out image into the image of the display size.

9. An image transmission system comprising a transmission line on which packets are transmitted, at least one frame synchronization signal receiving apparatus, and a frame synchronization signal transmission apparatus, wherein
the frame synchronization signal transmission apparatus outputs a value indicating temporal difference with respect to the frame synchronization signal toward the transmission line as a frame synchronization packet, and
the frame synchronization signal receiving apparatus, when it receives the frame synchronization packet, adjusts a phase of the frame synchronization signal based on the value.

10. The image transmission system of Claim 9 wherein
the frame synchronization signal transmission apparatus includes a first counter for counting the number of clocks, and a first comparison unit which compares a value of the first counter to a predetermined fixed value and outputs the frame synchronization signal when there is match between the value of the first counter and the predetermined fixed value, and outputs the value of the first counter toward the transmission line as the frame synchronization packet, and
the frame synchronization signal receiving apparatus includes a second counter for counting the number of clocks, and a second comparison unit which compares a value of the second counter to a predetermined fixed value and outputs the frame synchronization signal when there is match between the value of the second counter and the predetermined fixed value, and when it receives the frame synchronization packet, the receiving apparatus presets its value in the second counter.

11. An image transmission apparatus connected to a transmission line which is time-shared into plural access units and an apparatus connected thereto uses the access unit to transmit a packet, wherein
said apparatus receives an image signal and layout information including a display position indicating a position of the image signal in a composite image as inputs, converts the image signal into an image signal of the size according to the display position, counts the number of access units, and outputs the converted image signal at timing according to the display position.

12. The image transmission apparatus of Claim 11 wherein
said apparatus includes image conversion means which converts a size of the image according to the layout information, and delay means which counts the number of usable access units, and outputs the converted image when the number of the usable access units is in a range corresponding to the display position.

13. The image transmission apparatus of Claim 11 wherein said apparatus receives layout information including an original image position for specifying a cut-out position of an image signal to be cut out from the image signal, cuts out the image signal in the position specified by the original image position, and then converts the cut-out image signal into the image signal of the size according to the display position.
